# EUROPEAN PATENT APPLICATION

(11) **EP 4 524 206 A1**
(43) Date of publication of application: **19.03.2025**
(21) Application number: 23803619.8
(22) Date of filing: 11.05.2023
(51) Int. Cl.: C08L 101/00, C08G 59/42, C08L 63/00, C08L 67/00, C08L 71/00, C08L 71/02, C08L 101/16

(54) **IMPROVEMENT OF VITRIMER BY POLYROTAXANE ADDITION**

(30) Priority: 12.05.2022 JP 2022078860; 08.11.2022 JP 2022178700
(71) Applicant: The University of Tokyo, Bunkyo-ku, Tokyo 113-8654 (JP)
(72) Inventor: ITO, Kohzo, Tokyo 113-8654 (JP); ANDO, Shota, Tokyo 113-8654 (JP); HIRANO, Masaki, Tokyo 113-8654 (JP)
(74) Representative: Maiwald GmbH
(86) International application number: PCT/JP2023/017809
(87) International publication number: WO 2023/219145

(57) **Abstract**

Provided is a composition comprising: a vitrimer including a polymer having an ester bond; and a polyrotaxane including a plurality of cyclic molecules and a chain polymer penetrating cavities of the plurality of cyclic molecules, at least part of the plurality of cyclic molecules each including a functional group having an ester bond.

## Description

### Technical Field

The present invention relates to an improvement of a vitrimer by polyrotaxane addition.

### Background Art

Vitrimers are new types of materials developed in the early 2010's by Dr. Ludwik Leibler et al. in France. The vitrimers each have such a covalent bond network that its own topology can be changed by a bond exchange reaction activated by heat. The vitrimers flow like viscoelastic fluids at high temperatures, and despite the fact that the vitrimers are crosslinked bodies, the vitrimers can be easily processed by being increased in temperature. Meanwhile, at low temperatures, the bond exchange reaction becomes so slow as to be unmeasurable. The vitrimers each also have a self-healing property, and hence have been expected to find applications in self-healing materials.

In addition to an epoxy vitrimer produced by using a prepolymer of an epoxy resin, vitrimers produced by using various thermoplastic polymers, such as an aromatic polyester, polylactic acid, polyhydroxyurethane, and polybutadiene, have been known as vitrimers.

Most of the epoxy vitrimers are highly brittle and have low mechanical characteristics. However, recent research has shown that the addition of a hyperbranched polymer as a modifier inhibits a bond exchange (Non-patent Literature 1). In addition, another research has demonstrated that although the operative temperature of a vitrimer is dominated by a topology freezing transition temperature Tv that is the temperature at which a covalent bond exchange reaction becomes faster, an increase in external force to a test piece of an epoxy vitrimer shifts the start of the macroscopic flow thereof to lower temperatures, and hence its starting temperature approaches the accurate temperature Tv of the material at a specific stress level (Non-patent Literature 2). Improvements in mechanical characteristics of a vitrimer including a thermosetting or thermoplastic polymer have been desired.

### Citation List

### Non-patent Literature

NPL 1: Acta Polymerica Sinica, 5, pages 535-542, 2019
NPL 2: Polymer Volume 204, 9 September 2020, 122804

### Summary of Invention

### Technical Problem

An object of the present invention is to provide a composition comprising a vitrimer, the composition having both of toughness and a self-healing property, and a method of producing the composition.

### Solution to Problem

The present invention includes embodiments described below.

### Item 1.

A composition comprising:
a vitrimer including a polymer having an ester bond; and
a polyrotaxane including a plurality of cyclic molecules and a chain polymer penetrating cavities of the plurality of cyclic molecules, at least part of the plurality of cyclic molecules each including a functional group having an ester bond.

### Item 2.

The composition according to Item 1, wherein an ester exchange reaction occurs between the ester bond of the polymer and the ester bond of the cyclic molecules of the polyrotaxane. Item 3.

The composition according to Item 1, wherein a content of the polyrotaxane in the composition is 20 mass% or less.

### Item 4.

The composition according to Item 1, wherein the polymer having an ester bond includes a thermoplastic polymer having an ester bond or a thermosetting polymer having an ester bond.

### Item 5.

The composition according to Item 1, wherein the polymer having an ester bond is a reaction product of an epoxy prepolymer having a glycidyl group and a carboxylic acid or a carboxylic acid anhydride.

### Item 6.

The composition according to Item 1, wherein the polymer having an ester bond includes a polyester.

### Item 7.

The composition according to Item 1, wherein a strain of the composition with respect to a tensile stress measured in a uniaxial elongation test increases as compared to a strain of a control product different from the composition only in that the control product is free of the polyrotaxane, and a difference between an initial elastic modulus of the composition and an initial elastic modulus of the control product is within ±10%. Item 8.

The composition according to Item 1, wherein a content of the polyrotaxane in the composition is 20 mass% or less, and a degradation ratio of the composition after 1,500 minutes in a heating condition in an alcohol solvent is 50% or more.

### Item 9.

The composition according to Item 1, wherein a content of the polyrotaxane in the composition is 20 mass% or less, and the composition is a biodegradable composition.

### Item 10.

A self-healing material including the composition of any one of Items 1 to 9.

### Item 11.

A method of producing a thermosetting composition comprising a vitrimer including a polymer having an ester bond and a polyrotaxane, the method including:
mixing an epoxy prepolymer having a glycidyl group and the polyrotaxane, the polyrotaxane including a plurality of cyclic molecules and a chain polymer penetrating cavities of the plurality of cyclic molecules, at least part of the plurality of cyclic molecules each including a functional group having an ester bond; and
mixing the mixture and a carboxylic acid or a carboxylic acid anhydride, to cure the mixture.

### Item 12.

The method according to Item 11, wherein the mixing the mixture and the carboxylic acid or the carboxylic acid anhydride is performed in the presence of a catalyst.

### Item 13.

The method according to Item 11, wherein the epoxy prepolymer having a glycidyl group is a compound represented by the following formula (I): 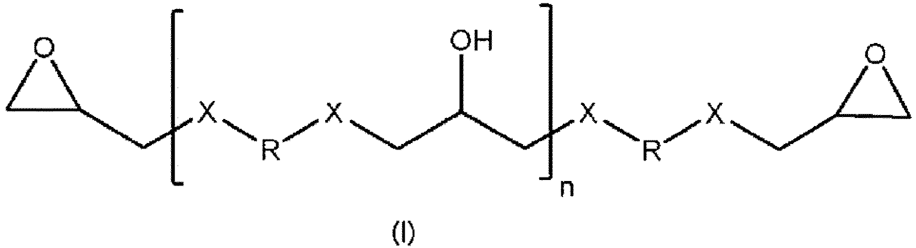 where X represents O, NH, or C(O)O, R represents a divalent aliphatic and/or aromatic moiety, and "n" represents a polymerization degree, and "n" represents from 0 to 25.

### Item 14.

A method of producing a thermoplastic composition comprising a vitrimer including a polymer having an ester bond and a polyrotaxane, the method including:
mixing a monomer for forming a thermoplastic polymer having an ester bond and the polyrotaxane, the polyrotaxane including a plurality of cyclic molecules and a chain polymer penetrating cavities of the plurality of cyclic molecules, at least part of the plurality of cyclic molecules each including a functional group having an ester bond; and
adding an ester exchange catalyst during the mixing of the monomer for forming the thermoplastic polymer having an ester bond and the polyrotaxane, or after the mixing.

### Advantageous Effects of Invention

According to the present invention, there are provided the composition comprising the vitrimer including the polymer and the polyrotaxane, the composition having both of toughness and a self-healing property, and the method of producing the composition.

### Brief Description of Drawings

Fig. 1 is a schematic view for illustrating the bond exchange of an ester bond between a vitrimer including a thermosetting resin and a polyrotaxane in a thermosetting composition comprising the vitrimer and the polyrotaxane.
Fig. 2 is a graph showing the results of small-angle X-ray scattering (SAXS).
Fig. 3 is a graph of stress-strain curves of the respective test pieces in which the amount of the polyrotaxane is changed.
Fig. 4 is a graph of stress-strain curves of the respective test pieces in which the kind of the polyrotaxane is changed.
Fig. 5 is a graph of stress-strain curves showing the results of the repeated tests of the uniaxial elongation tests of the respective test pieces at room temperature and after heating.

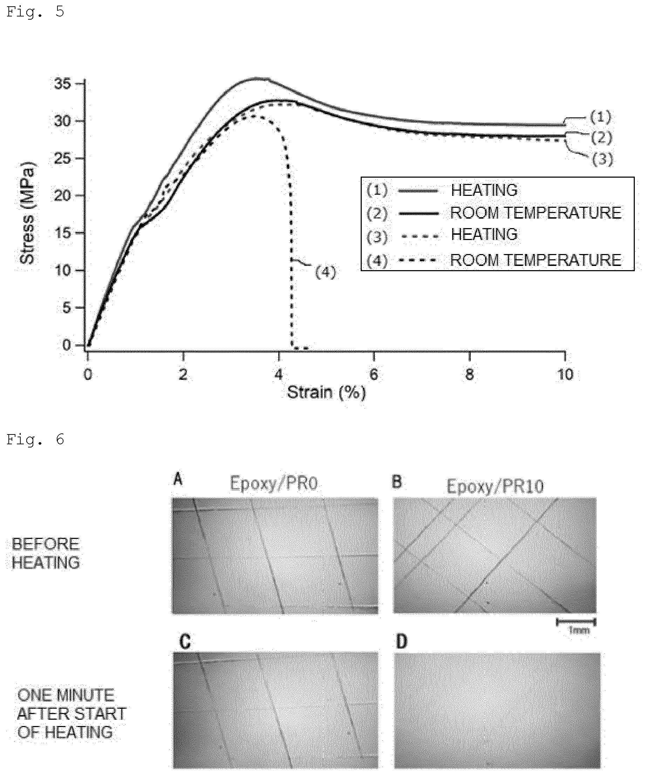

Figs. 6 are photographs of the moving images of the respective test pieces in a self-healing property test. (A) a photograph of a sample formed of a thermosetting composition comprising a polyrotaxane-free epoxy vitrimer before the start of its heating. (B) a photograph of a sample formed of a thermosetting composition comprising an epoxy vitrimer, which includes an epoxy at a ratio of 10 mass% of the thermosetting composition, before the start of its heating. (C) a photograph of the sample of (A) one minute after the start of the heating. (D) a photograph of the sample of (B) one minute after the start of the heating.
Fig. 7 is a graph showing the results of the dynamic viscoelasticity measurement of thermosetting compositions having different polyrotaxane amounts. Its axis of abscissa indicates a temperature.
Figs. 8 are photographs of various thermosetting compositions. (A) a photograph of the thermosetting composition of Example 1 including SH3400P. (B) a photograph of a thermosetting composition comprising APR. (C) a photograph of a thermosetting composition comprising HAPR.
Fig. 9 is a graph of stress-strain curves of test pieces formed of various thermosetting compositions.
Figs. 10 are photographs of the respective test pieces. (A) a photograph of the test piece "PCL/1%PR". (B) a photograph of the test piece "PCL/5%PR". (C) a photograph of the test piece "PCL/60%PR". (D) a photograph of the test piece "PCL/1%PR/cat". (E) a photograph of the test piece "PCL/5%PR/cat". (F) a photograph of the test piece "PCL/60%PR/cat". The abbreviations "PCL", "PR", and "cat" represent polycaprolactone, the polyrotaxane, and an ester exchange catalyst, respectively.
Fig. 11 is a graph of stress-strain curves of test pieces formed of various polycaprolactone resin-containing compositions.
Figs. 12 are photographs of the respective test pieces. (A) a photograph of the test piece "PLGA/5%PR". (B) a photograph of the test piece "PLGA/10%PR". (C) a photograph of the test piece "PLGA/5%PR/cat". (D) a photograph of the test piece "PLGA/10%PR/cat". The abbreviations "PLGA", "PR", and "cat" represent polylactic acid-co-polyglycolic acid, the polyrotaxane, and the ester exchange catalyst, respectively.
Fig. 13 is a graph of stress-strain curves of test pieces formed of various polylactic acid-co-polyglycolic acid resin-containing compositions.
Fig. 14 is a graph of stress-strain curves of test pieces formed of various thermoplastic compositions.
Fig. 15 is a graph showing the weight changes of the respective samples.
Fig. 16 is a graph of comparison between the BOD biodegradabilities (%) of the respective samples.
Fig. 17(A) is a photograph of a deformed test piece of a polyrotaxane-added epoxy vitrimer (left) and a deformed test piece of a vitrimer (right) on a hot plate at the time of the start of their heating. Fig. 17(B) is a photograph of the two test pieces 1.5 minutes after the start of the heating. Fig. 17(C) is a photograph of the two test pieces 3 minutes after the start of the heating.
Fig. 18(A) to Fig. 18(G) are photographs showing a change in shape of a test piece of the polyrotaxane-added epoxy vitrimer.
Fig. 19 is a photograph showing a state in which both the ends of a sample obtained by bonding two test pieces of the polyrotaxane-added epoxy vitrimer to each other are pinched with a uniaxial tensile tester.
Fig. 20 is a graph showing the adhesive strengths of a sample (Vitrimer/PR10) formed of a test piece of the polyrotaxane-added epoxy vitrimer and a sample (Vitrimer) formed of a test piece of an epoxy vitrimer. Its axis of ordinate indicates an adhesive force, and its axis of abscissa indicates the stroke length of the tensile tester.

### Description of Embodiments

The term "vitrimer" as used herein refers to such a material that its own topology is changed by a bond exchange reaction activated by heat.

The term "polymer" as used herein refers to a compound having a repeating structure formed of a plurality of basic units derived from the polymerization of a monomer. The "polymer" encompasses a "resin".

The term "resin" as used herein refers to a synthetic resin, and encompasses a thermoplastic resin and a thermosetting resin.

The term "thermosetting resin" as used herein refers to a resin that is thermally cured by being crosslinked. The term "thermosetting resin" as used herein does not encompass a "thermosetting elastomer." The thermosetting elastomer refers to an elastomer that is cured by a chemical crosslinking reaction caused by heat.

The term "epoxy resin" as used herein refers to a thermosetting resin obtained by causing a prepolymer having two or more epoxy groups in its molecule and a curing agent to react with each other.

The term "thermoplastic resin" as used herein refers to a resin that softens when its temperature reaches its glass transition temperature or melting point.

The term "chemical degradability" as used herein refers to a property causing degradation by a chemical substance.

The term "biodegradation" as used herein refers to "degradation caused by enzymatic treatment occurring from a cell action," and the definition follows the definition of IUPAC (Pure Appl. Chem., Vol. 84, No. 2, pp. 377-410, 2012). The biodegradation encompasses degradation by a microorganism.

The terms "comprise" and "include" as used herein are each a concept comprehending "consist of."

In numerical ranges described herein in stages, the upper limit value or lower limit value of a numerical range at a certain stage may be freely combined with the upper limit value or lower limit value of a numerical range at any other stage. In addition, in a numerical range described herein, the upper limit value or lower limit value of the numerical range may be replaced with a value described in Examples or a value that may be uniquely derived from Examples. Further, in this description, numerical values tied to each other through the term "to" mean a numerical range including the numerical values in front of and behind the term "to" as a lower limit value and an upper limit value.

A composition of an embodiment of the present invention comprises: a vitrimer including a polymer having an ester bond; and a polyrotaxane including a plurality of cyclic molecules and a chain polymer penetrating cavities of the plurality of cyclic molecules, at least part of the plurality of cyclic molecules each including a functional group having an ester bond.

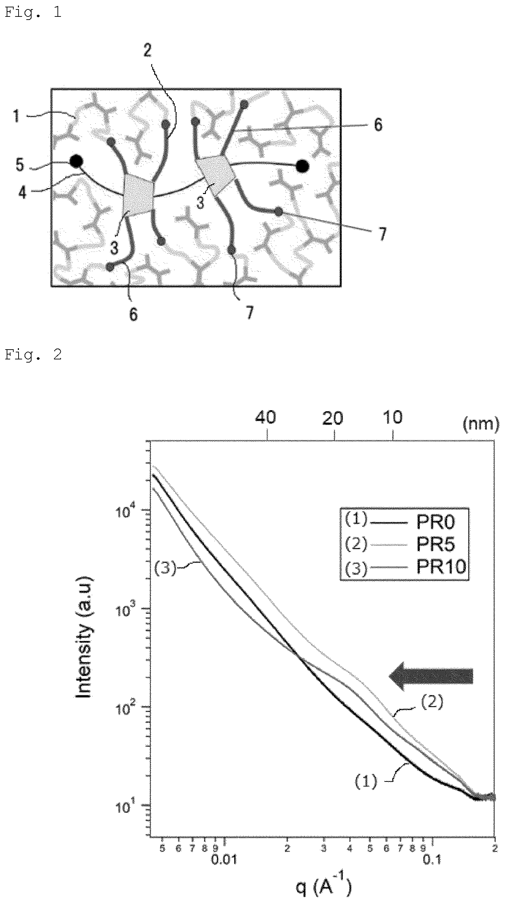

As schematically illustrated in Fig. 1 exclusively for helping understanding, the composition of the embodiment of the present invention includes: a vitrimer 1 including a polymer having an ester bond; and a polyrotaxane 2. The polymer having an ester bond may be a thermosetting polymer having an ester bond, or may be a thermoplastic polymer having an ester bond. The polyrotaxane 2 includes a plurality of cyclic molecules 3 and a chain polymer 4 penetrating the cavities of the plurality of cyclic molecules 3, and capping groups 5 for preventing the falling of the cyclic molecules 3 from the chain polymer 4 are bonded to both the terminals of the chain polymer 4. In addition, each of the plurality of cyclic molecules 3 includes a functional group 6 having an ester bond 7. The plurality of polyrotaxanes 2 are dispersed in the vitrimer 1.

An ester exchange reaction occurs between the ester bond of the polymer having the ester bond and the ester bond 7 of each of the cyclic molecules 3 of the polyrotaxane 2, and hence compatibility between the polymer and the polyrotaxane 2 is improved. When the composition is heated, the ester exchange reaction is further accelerated. Probably as a result of the foregoing, the toughness and self-healing property of the vitrimer 1 are improved as compared to those in the case where the polyrotaxane 2 is not included into the vitrimer 1.

In one embodiment, the above-mentioned polymer having an ester bond in the vitrimer is a thermosetting polymer resin. In a further embodiment, the above-mentioned thermosetting polymer having an ester bond is an epoxy polymer. The epoxy polymer encompasses a glycidyl-type epoxy polymer. In a further embodiment, the above-mentioned polymer having an ester bond in the vitrimer is free of any thermosetting elastomer.

In one embodiment, the above-mentioned thermosetting polymer having an ester bond is a thermosetting resin having an ester bond. In a further embodiment, the above-mentioned thermosetting resin having an ester bond is an epoxy resin. The epoxy resin encompasses a glycidyl-type epoxy resin.

The glycidyl-type epoxy polymer or resin is obtained by causing an epoxy prepolymer having a glycidyl group to react with a curing agent.

In one embodiment, the epoxy prepolymer having a glycidyl group is a compound represented by the following formula (I): 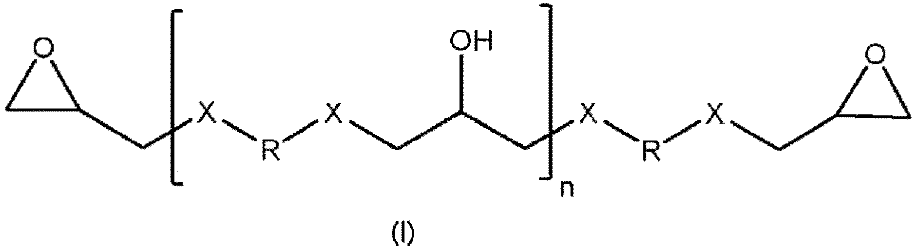 where X represents O, NH, or C(O)O, R represents a divalent aliphatic and/or aromatic moiety, and "n" represents a polymerization degree, and "n" represents from 0 to 25.

In one embodiment, in the formula (I), X represents O, R represents a divalent aliphatic and/or aromatic moiety, and "n" represents from 0 to 5.

A person skilled in the art understands the epoxy prepolymer having a glycidyl group suitable for the embodiment of the present invention. Examples of such epoxy prepolymer having a glycidyl group include bisphenol A glycidyl ether (DGEBA), bisphenol F diglycidyl ether, trimethylol triglycidyl ether (TMPTGE), ethylene glycol glycidyl ether, bisphenol A polyethylene glycol diglycidyl ether, bisphenol A polypropylene glycol diglycidyl ether, an epoxidized polyvalent unsaturated fatty acid, an epoxidized alicyclic compound, and combinations thereof. In one preferred embodiment, the epoxy prepolymer having a glycidyl group is bisphenol A glycidyl ether (DGEBA).

The curing agent is preferably a curing agent having, in one molecule thereof, a plurality of functional groups that can each react with a reactive group of the epoxy prepolymer having a glycidyl group to form an ester bond, such as an anhydride, an acid, and a hydroxy group. In a preferred embodiment, the curing agent is a carboxylic acid or a carboxylic acid anhydride. Example of the carboxylic acid include, but not limited to, glutaric acid and sebacic acid. Examples of the carboxylic acid anhydride include, but not limited to, glutaric anhydride, succinic anhydride, tetrahydrophthalic anhydride (THPA), and hexahydrophthalic anhydride (HMPA).

In one embodiment, the epoxy prepolymer having a glycidyl group is an epoxy prepolymer having a glycidyl group, the curing agent is a carboxylic acid or a carboxylic acid anhydride, and the epoxy resin is a product of a reaction between the prepolymer and the curing agent.

In one embodiment, the thermosetting polymer or resin having an ester bond is cured without use of any curing agent. For example, a polymer or resin having benzoxazine, maleimide, nadimide, or ethynyl groups as terminal thermally crosslinkable groups at both the terminals of its polymer chain out of the thermosetting polymers or resins does not require any curing agent because the polymer or the resin has self-thermal crosslinkability. Alternatively, an epoxy polymer or resin having an aromatic acetal group and an epoxy group in one molecule thereof can self-cure. Such self-curable thermosetting polymer or resin can be easily understood by a person skilled in the art.

The molecular weight of the thermosetting polymer having an ester bond is not particularly limited, and may be, for example, from 500 to 2,000,000 in terms of number-average molecular weight or weight-average molecular weight. For example, the molecular weight may be as low as less than 10,000, or may be as high as 10,000 or more.

In one embodiment, the above-mentioned polymer having an ester bond in the vitrimer is a thermoplastic polymer having an ester bond. In a further embodiment, the above-mentioned thermoplastic polymer having an ester bond is a polyester.

In one embodiment, the above-mentioned thermoplastic polymer having an ester bond is a thermoplastic resin having an ester bond. In a further embodiment, the above-mentioned thermoplastic resin having an ester bond is a polyester resin.

Examples of the polyester or the polyester resin include an aliphatic polyester, an alicyclic polyester, an aromatic polyester, and an aliphatic aromatic polyester.

The polyester may be prepared by, for example, a polycondensation reaction between a polycarboxylic acid (including a dicarboxylic acid and a tricarboxylic acid) and a polyol (including a diol and a triol), a polycondensation reaction between hydroxycarboxylic acids, a polycondensation reaction among a polycarboxylic acid (including a dicarboxylic acid and a tricarboxylic acid), a polyol (including a diol and a triol), and a hydroxycarboxylic acid, and a polycondensation reaction between an acid anhydride and a polyol (including a diol and a triol). The polycarboxylic acid (including a dicarboxylic acid and a tricarboxylic acid) is preferably a saturated polycarboxylic acid. The vitrimer of the polyester may be produced by causing those monomers to react with each other preferably in the presence of an ester exchange catalyst to be described later.

Examples of the aliphatic polyester include polycaprolactone (PCL), polypivalolactone, polylactic acid (PLA), polyglycolic acid (PGA), a polyhydroxyalkanoic acid (PHA), copolymers thereof, and combinations thereof. Examples of the copolymer include a polyhydroxyalkanoate (PHA), such as poly(3-hydroxybutyrate-co-hydroxyhexanoate) (3HB-co-3HH) or poly(3-hydroxybutyrate-co-3-hydroxyvalerate) (3HB-co-3HV), polylactic acid-co-polyglycolic acid (PLGA), polylactic acid-co-polycaprolactone, polyethylene succinate (PES), polybutylene succinate (PBS), and polybutylene succinate adipate (PBSA).

Examples of the alicyclic polyester include poly-C₂₋₆ alkylene C₆₋₁₂ cycloalkanoates such as polyethylene cyclohexanoate.

Examples of the aromatic polyester include: C₂₋₆ polyalkylene C₆₋₁₂ arylates (homopolyesters), such as polyethylene terephthalate, polypropylene terephthalate, polybutylene terephthalate, polyethylene naphthalate, polytrimethylene naphthalate, and polytetramethylene naphthalate; and copolymers each including a C₂₋₆ polyalkylene C₆₋₁₂ arylate unit (e.g., copolyesters each obtained by copolymerizing a C₂₋₆ polyalkylene C₆₋₁₂ arylate with an aromatic dicarboxylic acid, such as adipic acid, isophthalic acid, or phthalic acid).

Examples of the aliphatic aromatic polyester include polybutylene adipate-co-terephthalate (PBAT), polytetramethylene adipate-co-terephthalate, and polyethylene terephthalate succinate (PETS).

The vitrimer including the polymer having an ester bond may be a vitrimer described in a known literature, and examples thereof include vitrimers described in M. Capelot et al., J. Am. Chem. Soc., 2012, 134, 7664-7667, Y. Yang et al., Chem. Sci., 2014, 5, 3486-3492, and J. P. Brutman et al., ACS Macro Lett., 2014, 3, 607-610.

Although the hydrocarbon chain moiety of the polyester may be unsubstituted, the polyester may include a functional group, such as an ether group, a carbonyl group, or an ester group, in its hydrocarbon chain. In addition, the polyester may further have at least one selected from the group consisting of: a thioester bond; a carbonyl group; a hydroxy group; a urethane bond; a urea bond; an associative bond formed by an aldehyde and an imine causing an aldehyde-imine bond exchange reaction; an associative bond formed by an imine and another imine causing an imine-imine bond exchange reaction; an associative bond formed by an amine and an imine causing an amine-imine bond exchange reaction; an associative bond formed by a vinylogous amide or a vinylogous urethane and an amine causing an amino exchange reaction; an associative bond formed by a poly(1,2,3-triazolium) ionic liquid (PTIL) and a bifunctional crosslinking agent causing the transalkylation reaction of a C-N bond; and an associative bond formed by disulfides causing the addition and elimination of a silanol or a silanolate in a siloxane moiety, and a bond exchange reaction between the disulfides. The presence of such functional group or bond increases the number of associative bond exchanges, and hence further accelerates the ester exchange of the vitrimer.

For the amine-imine bond exchange reaction, refer to, for example, P. Taynton et al., Adv. Mater., 2014, 26, 3938-3942. For the amino exchange reaction caused by the vinylogous amide or the vinylogous urethane and the amine, refer to, for example, W. Denissen et al., Funct. Mater., 2015, 25, 2451-2457. For the transalkylation reaction of the C-N bond, refer to, for example, M. M. Obadia et al., J. Am. Chem. Soc., 2015, 137, 6078-6083. For the addition and elimination of the silanol or the silanolate in the siloxane moiety, refer to P. Zheng et al., J. Am. Chem. Soc., 2012, 134, 2024-2027. For the bond exchange reaction between the disulfides, refer to, for example, M. Pepels et al., Polym. Chem., 2013, 4, 4955-4965.

The molecular weight of the thermoplastic polymer having an ester bond is not particularly limited, and may be, for example, from 500 to 2,000,000 in terms of number-average molecular weight or weight-average molecular weight. For example, the molecular weight may be as low as less than 10,000, or may be as high as 10,000 or more.

The polyrotaxane is a compound having a structure in which the chain polymer penetrates the cavities of the cyclic molecules, and the capping groups for preventing the falling of the cyclic molecules are bonded to both the terminals of the chain polymer. The polyrotaxane may be produced on the basis of a known literature, or a commercial product available from a manufacturer such as ASM Inc. may be utilized.

The chain polymer for forming the polyrotaxane is, for example, a molecule that can penetrate the rings of the plurality of cyclic molecules. The chain polymer is preferably a polymer having a monomer repeating unit. Examples of the chain polymer may include polyalkylenes, polyesters, polyethers, polyamides, polyacryls, and chain polymers each having a benzene ring. Preferred examples of the chain polymer include polyethylene glycol, polyethylene oxide, polypropylene glycol, polylactic acid, polycaprolactone, polyethylene, polypropylene, polyvinyl acetal, polyvinyl methyl ether, polyvinylpyrrolidone, polyacrylamide, polymethyl acrylate, polymethyl methacrylate, and polystyrene. Although the chain polymer is preferably free of any ester bond, the polymer may have an ester bond as long as the effect of the present invention is exhibited. The chain polymer may have a branched chain as long as the polymer is configured so as to be capable of penetrating the rings of the above-mentioned cyclic molecules. In one preferred embodiment, the chain polymer is at least one kind selected from the group consisting of: polyethylene glycol; polyvinyl alcohol; polyethyleneimine; and a copolymer including one or more kinds of these polymers. In a more preferred embodiment, the chain polymer is at least one kind selected from the group consisting of: polyethylene glycol; polypropylene glycol; and polyethylene glycol.

The chain polymer may be a polymer having a structure whose entirety is formed of the repetition of the same monomer, may be a block copolymer including at least two blocks, or may be a block copolymer including at least three blocks.

For example, when the chain polymer is a water-soluble chain molecule formed of one kind of polymer, the polymer may be a polymer formed only of polyethylene glycol, polypropylene glycol, polyvinyl alcohol, polyethyleneimine, or polyethylene glycol. When the chain molecule is a chain polymer formed of three blocks, the central block may be polypropylene glycol, and both the sides thereof may each be polyethylene glycol.

Although the molecular weight of the chain polymer is not particularly limited, for example, the molecular weight is more preferably from 3,000 to 500,000, more preferably from 7,000 to 200,000, still more preferably from 10,000 to 100,000 in terms of number-average molecular weight. Alternatively, for example, the molecular weight is more preferably from 3,000 to 500,000, more preferably from 7,000 to 200,000, still more preferably from 10,000 to 100,000 in terms of weight-average molecular weight. The "number-average molecular weight" and the "weight-average molecular weight" as used herein may each be determined from a value in terms of polyethylene glycol obtained by gel permeation chromatography (GPC) measurement.

Both the terminals of the chain polymer preferably have reactive groups that can react with the capping groups for preventing the falling of the cyclic molecules from the chain polymer. Thus, the capping groups to be described later are easily bonded to both the terminals of the chain polymer. Examples of the reactive group include an amino group, a hydroxy group, a carboxyl group, a thiol group, a disulfide group, a vinyl group, an acryloyl group, a methacryloyl group, and a sulfo group. Of those, an amino group and a carboxyl group are preferred.

The capping groups to be bonded to the chain polymer of the polyrotaxane are not particularly limited as long as the groups act to prevent the falling of the cyclic molecules from the chain polymer. For example, the capping group is desirably selected from the group consisting of: a dinitrophenyl group; a cyclodextrin; an adamantane group; a trityl group; fluorescein; a silsesquioxane; pyrene; a substituted benzene (examples of its substituent may include, but not limited to, alkyl, alkyloxy, hydroxy, halogen, cyano, sulfonyl, carboxyl, amino, and phenyl groups, and one or a plurality of the substituents may be present); a polynuclear aromatic group that may be substituted (examples of its substituent may include, but not limited to, the same groups as those described above, and one or a plurality of the substituents may be present); and a steroid. The capping group is preferably selected from the group consisting of: a dinitrophenyl group; a cyclodextrin; an adamantane group; a trityl group; fluorescein; a silsesquioxane; and pyrene, and is more preferably an adamantane group or a cyclodextrin.

Examples of the cyclic molecules for forming the polyrotaxane include: various cyclodextrins (α-cyclodextrin, β-cyclodextrin, γ-cyclodextrin, and derivatives thereof, and the derivatives are each preferably a derivative, which retains the carbon skeleton of a cyclodextrin, and in which any one or any plurality of functional groups bonded to the carbon skeleton are substituted); a crown ether; a benzocrown; a dibenzocrown; a dicyclohexanocrown; and derivatives thereof.

In the present invention, the polyrotaxane includes the plurality of cyclic molecules, and at least part of the plurality of cyclic molecules each include the functional group having an ester bond. Although all the cyclic molecules in the polyrotaxane in the composition may each include the functional group having an ester bond, at least part of the cyclic molecules in the polyrotaxane in the composition each only need to include the functional group having an ester bond as long as the ester exchange reaction occurs between the ester bond of the polymer having the ester bond in the vitrimer and the ester bond of the cyclic molecules of the polyrotaxane.

When the cyclic molecules are each, for example, a cyclodextrin, the cyclodextrin has a hydroxy group in a molecule thereof. Accordingly, when the cyclodextrin is caused to react with an acid, an ester bond can be introduced into each of the cyclic molecules. Examples of the functional group having an ester bond in the cyclic molecules include a polycaprolactone group and a polyester group.

The cyclic molecules may each further include an additional functional group except the functional group having an ester bond. Examples of the additional functional group include an acetyl group, a propyl group, a hexanoyl group, a methyl group, an ethyl group, a propyl group, a 2-hydroxypropyl group, a cyclohexyl group, a butylcarbamoyl group, a hexylcarbamoyl group, a phenyl group, an alkoxysilane group, an acryloyl group, a methacryloyl group, and a cinnamoyl group, polymers (e.g., a polycarbonate group, a polyamide group, and a polyurethane group), and derivatives thereof.

The cyclic molecules may each further include a reactive group. Examples of such reactive group may include a hydroxy group, a carboxyl group, an amino group, an epoxy group, an isocyanate group, a thiol group, and an aldehyde group.

The plurality of polyrotaxanes may be crosslinked to each other through the functional groups of the cyclic molecules. The functional groups of the cyclic molecules may directly bond the plurality of polyrotaxanes, or may bond the polyrotaxanes through a crosslinking agent that is reactive with the functional groups of the cyclic molecules. When the polyrotaxane is turned into an elastomer by the crosslinking, the composition of this embodiment comprising the vitrimer including the polymer having an ester bond and the polyrotaxane can be further toughened.

The term "inclusion ratio" as used herein refers to the ratio of the inclusion amount of the cyclic molecules in which the chain polymer is included to the maximum inclusion amount of the cyclic molecules for the chain polymer. The inclusion ratio may be determined by, for example, nuclear magnetic resonance spectroscopy (NMR) or gel permeation chromatography (GPC) measurement.

The inclusion ratio of the polyrotaxane is preferably from 0.1% to 100%, more preferably from 0.1% to 50%, still more preferably from 1% to 50%, most preferably from 1% to 30%.

Although the amount of the polyrotaxane in the composition of this embodiment is not particularly limited, the amount is preferably 0.1 mass% or more, more preferably 1 mass% or more, still more preferably 5 mass% or more in terms of improvements in self-healing property and toughness of the composition.

In addition, in terms of exhibition of the original action of the polymer, the amount of the polyrotaxane in the composition is preferably 50 wt% or less, more preferably 40 mass% or less, still more preferably 30 mass% or less. In one embodiment, the amount of the polyrotaxane in the composition is 20 wt% or less in terms of improvements in self-healing property and toughness of the composition.

In one embodiment, the amount of the polyrotaxane in the composition is preferably from 1 mass% to 40 mass%, more preferably from 1 mass% to 30 mass%, still more preferably from 1 mass% to 20 mass%.

The mass ratio (which may be referred to as "vitrimer:polyrotaxane") of the polymer having an ester bond (in particular, a thermosetting polymer or a thermoplastic polymer) to the polyrotaxane in the composition is preferably from 99.9:0.1 to 1:1, more preferably from 99:1 to 1:1, more preferably from 95:5 to 1:1, more preferably from 95:5 to 3:2, still more preferably from 95:5 to 4:1 in terms of improvements in self-healing property and toughness of the composition.

Although the total amount of the vitrimer and the polyrotaxane in the composition is not particularly limited, the amount is preferably 50 mass% or more, 60 mass% or more, 70 mass% or more, 80 mass% or more, or 90 mass% or more in terms of improvements in self-healing property and toughness of the composition. The total amount of the vitrimer and the polyrotaxane in the composition is preferably 95 mass% or more, 98 mass% or more, or 100 mass%.

The composition of the embodiment of the present invention preferably includes an ester exchange catalyst. The ester exchange catalyst is a catalyst that causes an ester exchange reaction in the vitrimer to be produced and/or between the vitrimer and the polyrotaxane. Such ester exchange catalyst is known, and examples thereof include, but not limited to, zinc acetate (Zn(OAc)₂) and a hydrate thereof, zinc acetylacetonate (Zn(acac)₂) and a hydrate thereof, triazabicyclodecene (TBD), tetraisopropyl titanate, antimony trioxide, dibutyltin dioctylate, dibutyltin dilaurate (DBTDL), monobutyltin oxide (MBTO), and dibutyltin oxide (DBTO). The addition amount of the ester exchange catalyst may be appropriately determined by a person skilled in the art. In one embodiment, the amount of the ester exchange catalyst is set to from 0.001 mass% to 10 mass% with respect to 100 parts by mass of the polymer having an ester bond.

The composition of the embodiment of the present invention may further include a polymer causing an associative bond exchange, the polymer having at least one selected from the group consisting of: a thioester bond; a carbonyl group; a hydroxy group; a urethane bond; a urea bond; an associative bond formed by an aldehyde and an imine causing an aldehyde-imine bond exchange reaction; an associative bond formed by an imine and another imine causing an imine-imine bond exchange reaction; an associative bond formed by an amine and an imine causing an amine-imine bond exchange reaction; an associative bond formed by a vinylogous amide or a vinylogous urethane and an amine causing an amino exchange reaction; an associative bond formed by a poly(1,2,3-triazolium) ionic liquid (PTIL) and a bifunctional crosslinking agent causing the transalkylation reaction of a C-N bond; and an associative bond formed by disulfides causing the addition and elimination of a silanol or a silanolate in a siloxane moiety, and a bond exchange reaction between the disulfides. The blending of such polymer further accelerates the associative bond exchange of the vitrimer. Polymers that cause the respective bond exchange reactions are known.

The composition of the embodiment of the present invention may include any other additive, such as a plasticizer, a surfactant, a lubricant, a filler, a dispersant, an antioxidant, a light stabilizer, a UV absorber, a colorant, or a flame retardant, in addition to the vitrimer comprising the polymer and the polyrotaxane. Those additives may be used alone or in combination thereof.

In the above-mentioned composition of this embodiment comprising the vitrimer including the polymer (a thermosetting polymer or a thermoplastic polymer) and the polyrotaxane, the self-healing property and toughness of the composition are improved as compared to those of a composition different from the composition only in that the polyrotaxane is not included.

In one embodiment, the strain of the composition with respect to a tensile stress measured in a uniaxial elongation test increases as compared to the strain of a control product different from the composition only in that the control product is free of the polyrotaxane, and a difference between the initial elastic modulus of the composition and the initial elastic modulus of the control product is within ±10%. The polymer having an ester bond in the composition may be a thermosetting polymer or a thermoplastic polymer.

In a specific embodiment, the strain of the composition with respect to the tensile stress measured in the uniaxial elongation test is 1.5 or more times, 2 or more times, 3 or more times, or 4 or more times as large as the strain of the control product different from the composition only in that the control product is free of the polyrotaxane at any value in the tensile stress range of up to 30 MPa (e.g., 5 MPa, 10 MPa, 20 MPa, or 30 MPa). The polymer having an ester bond in the composition may be a thermosetting polymer or a thermoplastic polymer.

In a specific embodiment, the strain of the composition with respect to the tensile stress measured in the uniaxial elongation test is 4 or more times as large as the strain of the vitrimer for forming the thermosetting composition at any value in the tensile stress range of from 1 MPa to 30 MPa (e.g., 5 MPa, 10 MPa, 20 MPa, or 30 MPa). The polymer having an ester bond in the composition may be a thermosetting polymer or a thermoplastic polymer.

In addition, the thermosetting composition of the embodiment of the present invention comprising the vitrimer including the thermosetting polymer, in particular, a thermosetting resin is improved in self-healing ability by being heated. For example, when a flaw is made in the surface of the thermosetting composition of the embodiment of the present invention, self-healing occurs even at room temperature (about 20°C), and with the lapse of time, the materials of the thermosetting composition are brought into contact with each other to self-heal the composition until the flaw becomes unseeable in its optical microscope observation. However, when the thermosetting composition is heated, the rate of the self-healing increases to shorten a time period required for the flaw to disappear. Although a heating temperature is not particularly limited, the temperature is preferably a temperature lower than the melting point of the thermosetting polymer, and in one embodiment, the temperature is from 30°C to 240°C. In one embodiment, the temperature is from 30°C to 200°C. In one embodiment, the temperature is from 50°C to 180°C. In one embodiment, the temperature is from 100°C to 160°C.

In one embodiment, the thermosetting composition of the embodiment of the present invention comprising the vitrimer including the thermosetting polymer has a self-healing ability higher than that of the control product different from the thermosetting composition only in that the control product is free of the polyrotaxane. In a further embodiment, the thermosetting composition of the embodiment of the present invention has a self-healing ability at the time of its heating higher than that of the control product different from the thermosetting composition only in that the control product is free of the polyrotaxane.

In one embodiment, the thermosetting composition of the embodiment of the present invention comprising the vitrimer including the thermosetting polymer has a self-healing ability higher than that of the vitrimer for forming the thermosetting composition. In a further embodiment, the thermosetting composition of the embodiment of the present invention comprising the vitrimer including the thermosetting polymer has a self-healing ability at the time of its heating higher than that of the vitrimer for forming the thermosetting composition.

In a specific embodiment, the composition of the present invention is a composition improved in chemical degradability.

In terms of chemical degradability, it is preferred that the content of the polyrotaxane in the composition be 50 mass% or less, and the degradation ratio of the composition after 1,500 minutes in a heating condition in an alcohol solvent be 50% or more. The degradation ratio is calculated from the expression "(weight of composition before heating-weight of composition after 1,500 minutes)/weight of composition before heating*100 (%)." The heating condition in the alcohol solvent particularly refers to heating in ethylene glycol at 150°C.

In terms of the acceleration of the chemical degradation of the composition, the upper limit value of the amount of the polyrotaxane in the composition is preferably 40 mass%, more preferably 30 mass%, still more preferably 20 mass%. The lower limit value of the amount of the polyrotaxane in the composition is preferably 1 mass%, more preferably 5 mass%.

The mass ratio (vitrimer:polyrotaxane) of the vitrimer to the polyrotaxane in the composition is preferably from 99.9:0.1 to 1:1, more preferably from 99:1 to 1:1, more preferably from 95:5 to 1:1, more preferably from 95:5 to 3:2, still more preferably from 95:5 to 4:1 in terms of the acceleration of the chemical degradation. When the amount of the vitrimer is equal to or more than the amount of the polyrotaxane, the chemical degradation of the vitrimer is advantageously accelerated.

Although the total amount of the vitrimer and the polyrotaxane in the composition is not particularly limited, the amount is preferably 50 mass% or more, 60 mass% or more, 70 mass% or more, 80 mass% or more, or 90 mass% or more in terms of the acceleration of the chemical degradation. In a specific embodiment, the total amount of the vitrimer and the polyrotaxane in the composition is 95 mass% or more, 98 mass% or more, or 100 mass%.

In one embodiment, the degradation amount of the composition of the embodiment of the present invention 5 hours after the start of its degradation in a heating condition in an alcohol solvent is 10 or more times as large as that of the control product different from the composition only in that the control product is free of the polyrotaxane. The heating condition in the alcohol solvent particularly refers to heating in ethylene glycol at 150°C.

In a specific embodiment, the composition of the present invention is a biodegradable composition.

The content of the polyrotaxane in the composition is preferably 50 mass% or less in terms of biodegradability. The upper limit value of the amount of the polyrotaxane in the composition is preferably 40 mass%, more preferably 30 mass%, still more preferably 20 mass%. The lower limit value of the amount of the polyrotaxane in the composition is preferably 1 mass%, more preferably 5 mass%.

The mass ratio (vitrimer:polyrotaxane) of the vitrimer to the polyrotaxane in the composition is preferably from 99.9:0.1 to 1:1, more preferably from 99:1 to 1:1, more preferably from 95:5 to 1:1, more preferably from 95:5 to 3:2, still more preferably from 95:5 to 4:1 in terms of the acceleration of biodegradation. When the amount of the vitrimer is equal to or more than the amount of the polyrotaxane, the biodegradation of the vitrimer is advantageously accelerated.

Although the total amount of the vitrimer and the polyrotaxane in the composition is not particularly limited, the amount is preferably 50 mass% or more, 60 mass% or more, 70 mass% or more, 80 mass% or more, or 90 mass% or more in terms of the acceleration of biodegradation. In a specific embodiment, the total amount of the vitrimer and the polyrotaxane in the composition is 95 mass% or more, 98 mass% or more, or 100 mass%.

In the composition comprising the vitrimer and the polyrotaxane, the biodegradability of the vitrimer is improved as compared to that of the vitrimer alone or a composition comprising the vitrimer, the vitrimer or the composition being different from the composition only in that the polyrotaxane is not included.

Although it is not wished that the invention of the present application be bound by a specific hypothesis or theory, an assumed reason for the unexpected effect in which the addition of the polyrotaxane further improves the degradability of the vitrimer is as follows: when the polyrotaxane is added to the vitrimer, the polyrotaxane serves as feed for degrading bacteria to accelerate the formation of a biofilm (high-concentration microorganism community) in a seeding source; and a high concentration of polymer-degrading bacteria in the biofilm perform the enzymatic degradation of the vitrimer to advance a degradation reaction.

When the composition comprising the vitrimer and the polyrotaxane is immersed in water (a sea or a lake) or buried in soil, and is then left for a certain time period, part or the entirety of the composition is degraded by the action of a microorganism in an environment. This composition is more environmentally friendly because its degradability is improved as compared to that of the vitrimer alone or the composition comprising the vitrimer, the vitrimer or the composition being different from the above-mentioned composition only in that the polyrotaxane is not included.

In a specific embodiment, the composition of the present invention is improved in shape memory recoverability. The composition of this embodiment recovers to its memorized shape more rapidly under the same heating condition than the vitrimer alone does. This is probably because the addition of the polyrotaxane to the vitrimer improves the molecular mobility of an epoxy vitrimer.

In a specific embodiment, the shape memory of the composition of the present invention is easily edited. The memorized shape of the composition of this embodiment can be edited at a heating temperature lower than that of the vitrimer alone. This is probably because the addition of the polyrotaxane makes the topology freezing transition temperature Tv (also referred to as "ester exchange temperature") of the composition of the present invention lower than the topology freezing transition temperature Tv of the vitrimer alone.

In a specific embodiment, the composition of the present invention is improved in adhesive force caused by melting. In the composition of this embodiment, an adhesive force between members formed of the composition caused by melting is larger than that of the vitrimer alone. This is probably because the addition of the polyrotaxane makes the topology freezing transition temperature Tv of the composition of the present invention lower than the topology freezing transition temperature Tv of the vitrimer alone, and hence brings the suppression of the thermal deterioration of an interface between the members and an increase in adhesive strength therebetween by a high-activity bond exchange.

The content of the polyrotaxane in the composition is preferably 50 mass% or less in terms of an improvement in shape memory recoverability of the composition, the editing of the shape memory thereof, and/or the enhancement of the melting adhesive force thereof. The upper limit value of the amount of the polyrotaxane in the composition is preferably 40 mass%, more preferably 30 mass%, still more preferably 20 mass%. The lower limit value of the amount of the polyrotaxane in the composition is preferably 1 mass%, more preferably 5 mass%.

The mass ratio (vitrimer:polyrotaxane) of the vitrimer to the polyrotaxane in the composition is preferably from 99.9:0.1 to 1:1, more preferably from 99:1 to 1:1, more preferably from 95:5 to 1:1, more preferably from 95:5 to 3:2, still more preferably from 95:5 to 4:1 in terms of the improvement in shape memory recoverability, the editing of the shape memory, and/or the enhancement of the melting adhesive force.

Although the total amount of the vitrimer and the polyrotaxane in the composition is not particularly limited, the amount is preferably 50 mass% or more, 60 mass% or more, 70 mass% or more, 80 mass% or more, or 90 mass% or more in terms of the improvement in shape memory recoverability, the editing of the shape memory, and/or the enhancement of the melting adhesive force. In a specific embodiment, the total amount of the vitrimer and the polyrotaxane in the composition is 95 mass% or more, 98 mass% or more, or 100 mass%.

A self-healing material including the composition of the embodiment of the present invention described above is also included in the scope of the present invention.

Next, a method of producing the composition of the embodiment of the present invention comprising the vitrimer including the polymer having an ester bond and the polyrotaxane is described.

First, a case in which the polymer having an ester bond is a thermosetting polymer is described. Such method includes: mixing an epoxy prepolymer having a glycidyl group and a polyrotaxane, the polyrotaxane including a plurality of cyclic molecules and a chain polymer penetrating cavities of the plurality of cyclic molecules, the plurality of cyclic molecules each including a functional group having an ester bond; and mixing the mixture and a carboxylic acid or a carboxylic acid anhydride, to cure the mixture.

The epoxy prepolymer having a glycidyl group and the polyrotaxane are as described above.

The above-mentioned step of mixing the mixture and the carboxylic acid or the carboxylic acid anhydride is preferably performed in the presence of an ester exchange catalyst. The ester exchange catalyst is as described above.

The addition amount of the ester exchange catalyst may be appropriately determined by a person skilled in the art. In one embodiment, the amount of the ester exchange catalyst is set to from 0.1 mol% to 10 mol% with respect to the epoxy groups of the epoxy prepolymer having a glycidyl group.

The timing at which the ester exchange catalyst is added may be before, simultaneous with, or after the mixing of the epoxy prepolymer having a glycidyl group and the polyrotaxane.

The curing may be performed at any temperature at which the crosslinking of the epoxy prepolymer having a glycidyl group and the carboxylic acid or the carboxylic acid anhydride occurs. As the temperature becomes higher, the rate of the curing becomes faster. In one embodiment, the curing is performed at from 120°C to 200°C. In one embodiment, the curing is performed at from 130°C to 170°C.

The length of a curing time may be determined for each case. In one embodiment, the curing time is from 1 hour to 72 hours.

In one embodiment, the curing temperature is from 140°C to 170°C, and the curing time is from 6 hours to 48 hours.

Next, a case in which the polymer having an ester bond includes a thermoplastic polymer is described. Such method includes mixing a monomer for forming a thermoplastic polymer having an ester bond and a polyrotaxane, the polyrotaxane including a plurality of cyclic molecules and a chain polymer penetrating cavities of the plurality of cyclic molecules, the plurality of cyclic molecules each including a functional group having an ester bond.

The term "monomer for forming a thermoplastic polymer having an ester bond" as used herein refers to a monomer that forms the thermoplastic polymer having an ester bond when polymerized. The polymerization of the monomer may be performed in the presence of a polymerization catalyst known as a polymerization catalyst for the thermoplastic polymer having an ester bond.

Examples of the monomer for forming the thermoplastic polymer having an ester bond include a polycarboxylic acid and a polyol, in particular, a diol and a dicarboxylic acid. Such polycarboxylic acid and polyol are known. The number of the kinds of the polycarboxylic acids may be one or two or more. The number of the kinds of the polyols may be one or two or more.

The above-mentioned method preferably further includes adding an ester exchange catalyst during the mixing of the monomer for forming the thermoplastic polymer having an ester bond and the polyrotaxane, or after the mixing. The ester exchange catalyst is as described above.

The ester exchange catalyst is as described above. The addition amount of the ester exchange catalyst may be appropriately determined by a person skilled in the art. In one embodiment, the amount of the ester exchange catalyst is set to from 0.002 mass% to 10 mass% with respect to 100 parts by mass of the thermoplastic polymer having an ester bond.

The monomer for forming the thermoplastic polymer having an ester bond is polymerized to produce the thermoplastic polymer having an ester bond. An ester exchange reaction can be accelerated by heating. A heating temperature may be, for example, from 40°C to 100°C, and a heating time may be from 3 hours to 72 hours. The reaction may be performed under atmospheric pressure or reduced pressure.

According to the above-mentioned method of producing the composition of the embodiment of the present invention including the vitrimer and the polyrotaxane, such a composition that the polyrotaxane is sufficiently dispersed in the vitrimer can be produced. The dispersion of the polyrotaxane in the composition may be observed by, for example, SAXS.

The resultant composition of the embodiment of the present invention including the vitrimer and the polyrotaxane may be molded into any three-dimensional shape, such as a film shape, a sheet shape, a cylindrical shape, or a case shape, by a known molding technology, such as extrusion molding, press molding, vacuum molding, injection molding, blow molding, inflation molding, or foam molding, to provide a molded body.

The composition of the embodiment of the present invention and the molded body including the composition may be used in various applications, such as a film, a sheet, and daily commodities, because the composition and the molded body each have toughness. The term "film" as used herein refers to a thin film having a thickness of less than 250 µm. The term "sheet" refers to a plate-like member having a thickness of 250 µm or more.

In addition, when the composition of the embodiment of the present invention is a thermosetting composition comprising a vitrimer including a thermosetting polymer, such composition and a molded body including the composition may be suitably used in apparatus whose maintenance is unnecessary or is desirably omittable, such as an automobile, a ship, a spacecraft, an aircraft, a windmill, sporting goods, a building material, a defense product, an electronic product, and a packaging material, because the composition and the molded body each have both of toughness and a self-healing property. The thermosetting composition of the embodiment of the present invention may be used in a composite material for forming such apparatus.

The present invention is more specifically described below by way of Examples. However, the present invention is not limited thereto.

### Examples

### Example 1 Production of Epoxy Vitrimer-based Thermosetting Composition

Bisphenol A glycidyl ether (DGEBA), 5 mol of Zn(acac)₂ with respect to the epoxy groups of DGEBA, a polyrotaxane, and glutaric anhydride were mixed in the stated order, and the mixture was heated at 140°C for 12 hours to be cured. Thus, an epoxy vitrimer-based thermosetting composition was obtained. SH3400P manufactured by ASM Inc. (ASM Inc., inclusion ratio: about 28%, substitution ratio: about 25%, entire molecular weight: about 700,000), which was a polycaprolactone-modified polyrotaxane (PR-g-PCL), was used. For a method of producing the PR-g-PCL, refer to WO 2015/041322 A1. The polycaprolactone-modified polyrotaxane is a polyrotaxane molecule in which a polyethylene glycol chain is inserted into the cavities of the molecules of α-cyclodextrin in a skewered manner, and part of the hydroxy groups of α-cyclodextrin are each substituted with polycaprolactone through a hydroxypropyl group. The amount of the polycaprolactone-modified polyrotaxane was hereinafter set to 0 mass%, 5 mass%, 10 mass%, or 20 mass% with respect to the thermosetting composition.

The results of SAXS are shown in Fig. 2. As the amount of the polycaprolactone-modified polyrotaxane varied, scattering derived from the polycaprolactone-modified polyrotaxane was observed in a different manner in the respective graphs. Accordingly, it was recognized that the molecules of the polycaprolactone-modified polyrotaxane were dispersed in the thermosetting composition at a nanolevel.

### Example 2 Uniaxial Elongation Test

A test piece was cut out of the thermosetting composition produced in Example 1 so as to be in a dumbbell state. The dimensions of the dumbbell test piece were set as follows: the thickness of the test piece was 1 mm, and the initial length and width of the middle shaft portion thereof were 30 mm and 4 mm, respectively. The test piece was pulled along its longitudinal direction toward both sides at a tensile rate of 1 mm/min, and its strain (%) with respect to a tensile stress was measured. In this Example, the strains (%) of the following compositions were measured: (1) a thermosetting composition comprising a polyrotaxane-free epoxy vitrimer; (2) a thermosetting composition comprising an epoxy vitrimer, which contained an epoxy at a ratio of 5 mass% of the thermosetting composition; and (3) a thermosetting composition comprising an epoxy vitrimer, which contained an epoxy at a ratio of 10 mass% of the thermosetting composition.

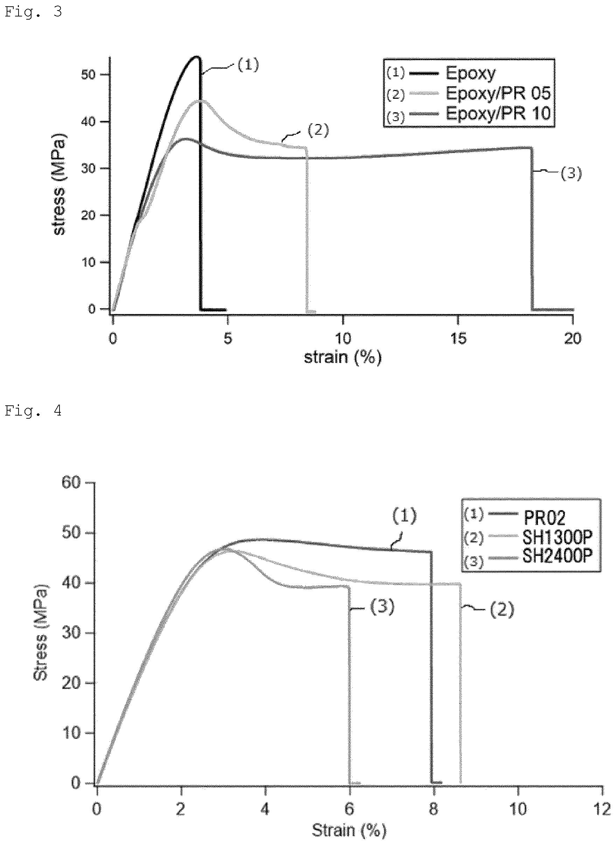

A graph in which a strain is plotted on an axis of abscissa and a stress is plotted on an axis of ordinate is shown in Fig. 3. An initial elastic modulus (Young's modulus) was measured from the gradient of a tangent passing through the origin of the stress-strain curve of each test piece. As shown in Table 1, even when the content of the polyrotaxane in each of the thermosetting compositions increased, the initial elastic modulus representing the hardness of the composition did not change. However, as shown in Fig. 3, as the polyrotaxane content increased, the value of the breaking strain thereof increased. As described above, the toughening of a material was achieved by the addition of a polyrotaxane having an ester bond to an epoxy vitrimer.

**Table 1. Initial Elastic Modulus**

| Sample name | Initial elastic modulus [GPa] |
|---|---|
| Epoxy/PR0 | 1.82 (±0.11) |
| Epoxy/PR5 | 1.96 (±0.08) |
| Epoxy/PR10 | 1.88 (±0.10) |

### Example 3 Uniaxial Elongation Test

Thermosetting compositions were produced in accordance with Example 1 by using three kinds of polycaprolactone-modified polyrotaxanes different from each other in inclusion ratio and polyethylene glycol chain molecular weight (PR02: inclusion ratio: 2%, PEG molecular weight: 3.5 kg/mol, SH1300P: inclusion ratio: 28%, PEG molecular weight: 1.1 kg/mol, ASM Inc., SH2400P: inclusion ratio: 28%, PEG molecular weight: 2 kg/mol, ASM Inc.). Bisphenol A glycidyl ether (DGEBA) was used as a prepolymer, 5 mol of Zn(acac)₂ with respect to the epoxy groups of DGEBA was used as an ester exchange catalyst, and the amount of each of the polycaprolactone-modified polyrotaxanes was set to 10 mass% with respect to the corresponding thermosetting composition. The strains (%) of the produced thermosetting compositions with respect to a tensile stress, and the Young's moduli thereof were measured in accordance with Example 2.

A graph in which a strain is plotted on an axis of abscissa and a stress is plotted on an axis of ordinate is shown in Fig. 4. As shown in Table 2, even when the kind of the polyrotaxane in the thermosetting composition varied, a reduction in hardness of the composition was suppressed, and as shown in Fig. 4, as the content of the polyrotaxane increased, the value of the breaking strain thereof increased. As described above, even when the inclusion ratio or chain molecule length of the polyrotaxane varied, the toughening of a material was achieved by the addition of a polyrotaxane having an ester bond to an epoxy vitrimer.

**Table 2. Young's Modulus (Gpa)**

| PR02 | SH1300 | SH2400 |
|---|---|---|
| 2.53 (±0.07) | 2.34 (±0.09) | 2.33 (±0.06) |

### Example 4 Repeated Test of Uniaxial Elongation Test

A test piece was cut out of the following thermosetting composition produced in Example 1 so as to be in a dumbbell state in the same manner as in Example 2: the amount of the polycaprolactone-modified polyrotaxane was 10 mass% with respect to the thermosetting composition. The uniaxial elongation test of the test piece was performed, and the strain (%) thereof with respect to a tensile stress was measured. In this Example, the content of the polyrotaxane in the test piece was set to 5 mass%, and the strain (%) of each of the following test pieces with respect to the tensile stress was measured: (1) a test piece in the first time of the uniaxial elongation test after its heating at 150°C for 30 minutes; (2) a test piece in the first time of the uniaxial elongation test at room temperature; (3) the test piece of the item (1) in the second time of the uniaxial elongation test after the heating at 150°C for 30 minutes; and (4) the test piece of the item (2) in the second time of the uniaxial elongation test at room temperature.

As shown in Fig. 5, when the test piece was heated (the graphs (1) and (3)), its strain was maintained at a large value in each of the first time and second time of the uniaxial elongation test, and as shown in Table 3, the Young's modulus of each of the test piece placed at room temperature and the test piece subjected to the heating treatment at 150°C in the second time was about 90% of the Young's modulus thereof in the first time. When the test piece was placed at room temperature (the graphs (2) and (4)), the test piece immediately broke after its yielding during the second elongation test (the graph (4)).

The following is assumed from those results: although the yielding of the test piece caused a void in the test piece, the heating of the test piece accelerated a bond exchange between an ester bond of the epoxy resin and an ester bond of a functional group of the cyclodextrin of the polyrotaxane to fill the void; and thus, no break occurred in the heated test piece, and hence the test piece was able to resist the repeated test.

**Table 3. Young's Modulus**

| | First time | Second time |
|---|---|---|
| Room temperature | 1.93 | 1.74 |
| Heating | 1.72 | 1.61 |

### Example 5 Self-healing Property Test

A flaw was made in the surface of each of the following thermosetting composition samples produced in Example 1, and then the samples were heated at around 150°C: the amounts of the polycaprolactone-modified polyrotaxane were 0 mass% and 10 mass% with respect to the thermosetting compositions. A change in appearance of each of the samples at that time was observed with an optical microscope (at a magnification of 50).

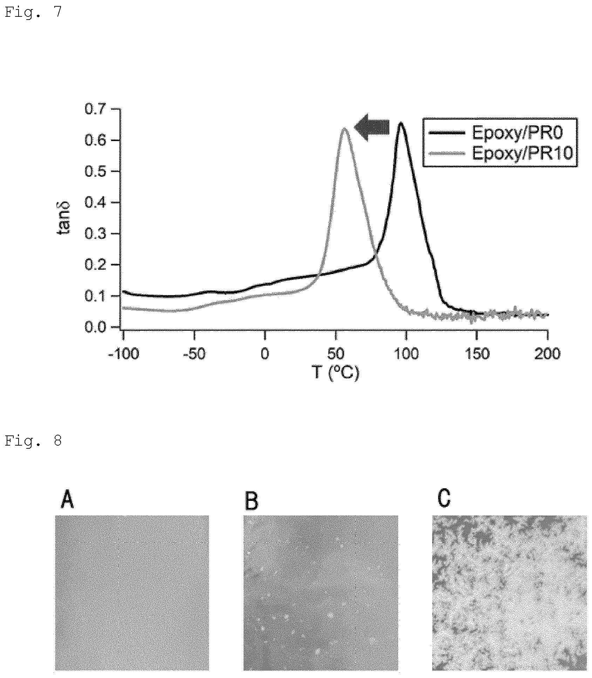

As shown in Fig. 6(A), in the sample free of the polycaprolactone-modified polyrotaxane, the flaw was not healed even after the lapse of about 1 minute from the flawing (Fig. 6(C)). In contrast, as shown in Fig. 6(B), in the thermosetting composition sample including 10 mass% of the polycaprolactone-modified polyrotaxane, the flaw was healed in about 20 seconds (Fig. 6(D) shows a state 1 minute after the start of the heating). In addition, as shown in Fig. 7, while the glass transition temperature of the sample free of the polycaprolactone-modified polyrotaxane was 96°C, the glass transition temperature of the sample including 10 mass% of the polycaprolactone-modified polyrotaxane reduced to 56°C. When the glass transition temperature is low, a molecular motion easily occurs even at low temperatures. Those results show that the addition of the polycaprolactone-modified polyrotaxane enhanced the self-healing property of the epoxy vitrimer.

It has been conceived that the healing of a flaw in a self-healing thermosetting resin involves physical healing based on shape memory and chemical healing based on a bond exchange. However, it is suggested that the heating increased a molecular motion in the thermosetting composition to accelerate a bond exchange between an ester bond of the epoxy resin and an ester bond of a functional group of the cyclodextrin of the polyrotaxane, and hence at least the chemical healing advanced.

### Example 6 Elongation Creep Test

As shown in Table 4, while the topology freezing transition temperature Tv of the sample free of the polycaprolactone-modified polyrotaxane was 147°C, the topology freezing transition temperature Tv of the sample including 10 mass% of the polycaprolactone-modified polyrotaxane reduced to 130°C. This is probably because the addition of the polycaprolactone-modified polyrotaxane to the epoxy vitrimer accelerates an ester exchange.

**Table 4. Tvs of Respective Samples**

| Sample name | Tv (°C) |
|---|---|
| Epoxy/PR0 | 147 |
| Epoxy/PR10 | 130 |

### Example 7

A polyrotaxane (APR) formed of α-cyclodextrin, polyethylene glycol, and 1-adamantanamine was synthesized in accordance with Journal of Polymer Science: Part A: Polymer Chemistry, Vol. 44, 6312-6323 (2006) (inclusion ratio: 25%, PEG molecular weight: 35 kg/mol).

In addition, a polyrotaxane (HAPR) that was a hydroxypropyl group-modified form of the APR was synthesized in accordance with Macromolecules, Vol. 38, No. 17, 7524-7527, 2005 (inclusion ratio: 25%, PEG molecular weight: 35 kg/mol).

Thermosetting compositions including the APR and the HAPR were each produced as a comparative example in accordance with Example 1. The amount of each of the polyrotaxanes was set to 10 mass% with respect to the corresponding thermosetting composition.

As shown in Fig. 8(A), in the thermosetting composition of Example 1 including the SH3400P as its polyrotaxane, its components were uniformly dispersed. In addition, also in the thermosetting compositions of Example 3 including the respective polycaprolactone-modified polyrotaxanes SH2400P, SH1300P, and PR02 as their polyrotaxanes, their components were uniformly dispersed (data not shown).

In contrast, as shown in Fig. 8(B), in the thermosetting composition comprising the APR, insoluble matter remained on its appearance, and as shown in Fig. 8(C), in the thermosetting composition comprising the HAPR, cloudiness was observed here and there. Accordingly, in each of the thermosetting compositions in which the α-cyclodextrin of the polyrotaxane was not modified, their components were not able to be uniformly dispersed. Even in the uniaxial tensile test of each of the compositions, brittle behavior was obtained, and hence the following result was obtained (data not shown): an improvement in toughness by the addition of the APR or the HAPR was not expectable. In other words, it was suggested that compatibility between a polyrotaxane and a vitrimer matrix was indispensable to an improvement in toughness of a vitrimer.

### Example 8

A carboxylic acid (Pripol^{™} 1040) serving as a curing agent and a zinc catalyst (Zn(OAc)₂•2H₂O: 5 mol to COOH) were added and stirred, and the mixture was heated under reduced pressure at 180°C for about 3 hours so that the components were dissolved. Thus, a dark brown curing agent solution was obtained. An epoxy resin (also referred to as "DER332" or "DGEBA", CAS No. 1675-54-3) and each of various polyrotaxanes were added, and the mixture was stirred at 140°C so that the components were dissolved. The curing agent solution was added to each of the resultant solutions so that the amount of a COOH group became 1 equivalent with respect to the epoxy groups of the resin. The polyrotaxanes were each added so as to account for 10 mass% of an entire cured product. The polyrotaxanes were "not added (neat)," the PR02, the SH1300P, the SH2400P, and the SH3400P.

After the addition of the curing agent solution, each of the resultant mixtures was immediately stirred at 150°C, and was poured into a mold, followed by heating at 140°C for 12 hours. Thus, thermosetting compositions that were polyrotaxane-added vitrimer thermosetting elastomers were obtained.

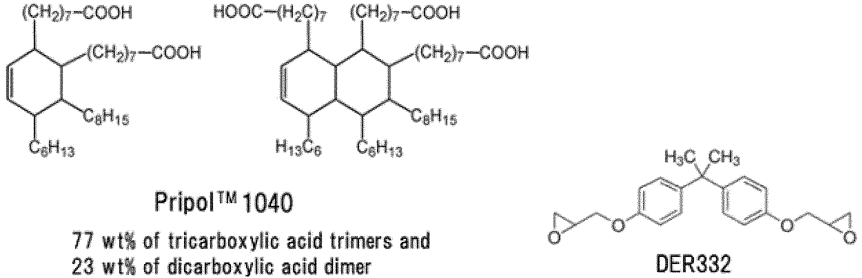

Test pieces were cut out of the produced thermosetting compositions in accordance with Example 2 so as to be in dumbbell states. Each of the test pieces was pulled along its longitudinal direction toward both sides at a tensile rate of 1 mm/min, and its strain (%) with respect to a tensile stress was measured at room temperature (about 23°C).

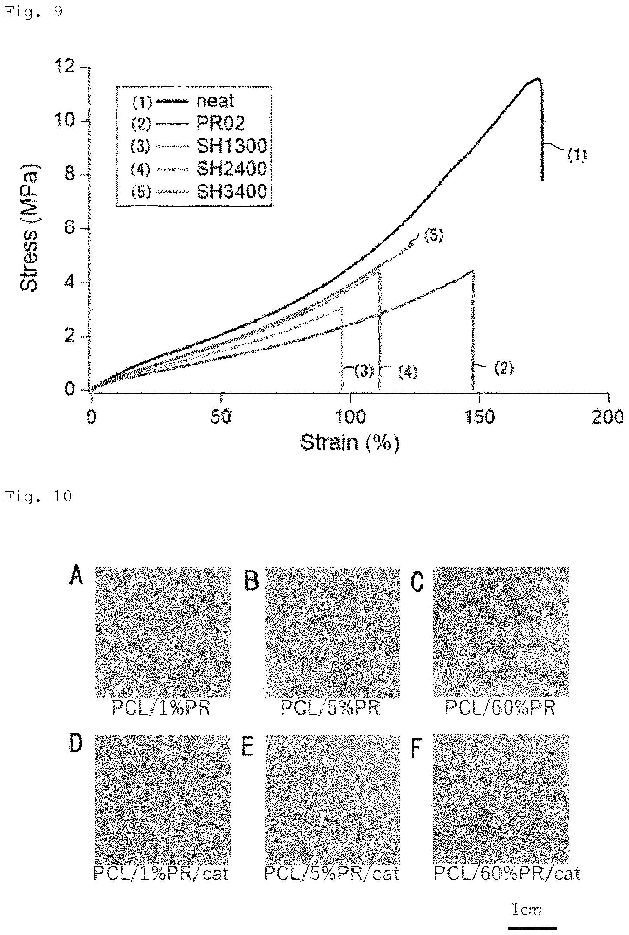

As shown in Fig. 9 and Table 5, in each of the polyrotaxanes, an increase in mechanical strength was not obtained, and both of a Young's modulus and a breaking elongation or strength tended to reduce. The results suggested that optimum values for various conditions, such as the chemical structure, compatibility, and blending amount of a polyrotaxane, existed depending on the chemical structure of a vitrimer serving as a matrix.

**Table 5. Young's Modulus (Gpa)**

| neat | PR02 | SH1300 | SH2400 | SH3400 |
|---|---|---|---|---|
| 9.72 (±0.58) | 4.59 (±0.06) | 5.30 (±0.10) | 5.14 (±0.10) | 5.50 (±0.10) |

### Example 9 Production of Polycaprolactone Vitrimer-based Composition

A polyrotaxane (SH3400P, inclusion ratio: 28%, axial molecular weight: 35 kg/mol, entire molecular weight: 700 kg/mol) and polycaprolactone (PCL, molecular weight: 80 kg/mol) were sufficiently dissolved in chloroform serving as a solvent. The polyrotaxane was added so that its amount became 1 mass%, 5 mass%, or 60 mass% with respect to the PCL. Dibutyltin dilaurate (DBTDL) serving as an ester exchange catalyst and hexamethylene diisocyanate (HMDI) serving as an auxiliary material were added to the solution, and the mixture was stirred for 10 minutes.

The solution was cast into a petri dish, and was left at rest at room temperature for 2 days so that the solvent was volatilized to cause the drying and solidification of the solution into a film shape. After that, the film was heated under reduced pressure at 80°C for 12 hours so that an ester exchange reaction was advanced. A PCL test piece to which neither the ester exchange catalyst nor the auxiliary material was added was also produced as a comparative example.

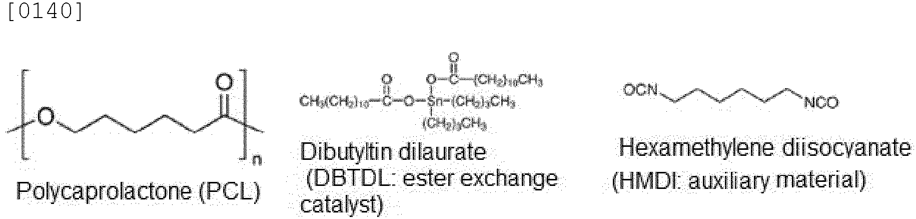

As shown in Fig. 10(A), Fig. 10(B), and Fig. 10(C), a microphase-separated structure having a size of 1 mm or less was observed from an appearance photograph of the test piece obtained by adding 1% or 5% of the polyrotaxane to the PCL, and a macrophase-separated structure having a size of around 1 cm was observed from an appearance photograph of the test piece obtained by adding 60% of the polyrotaxane thereto. Meanwhile, as shown in Fig. 10(D), Fig. 10(E), and Fig. 10(F), in the polyrotaxane-added PCL having added thereto DBTDL serving as the ester exchange catalyst, an extremely smooth surface structure was observed in each of the cases where the addition amounts of the polyrotaxane were 1%, 5%, and 60%. Accordingly, it was suggested that compatibilization between the PCL and the polyrotaxane was advanced by the acceleration of the ester exchange reaction.

### Example 10 Uniaxial Elongation Test

A test piece was cut out of the composition produced in Example 9 so as to be in a dumbbell state. The dimensions of the dumbbell test piece were set as follows: the thickness of the test piece was 0.1 mm, and the initial length and width of the middle shaft portion thereof were 12 mm and 2 mm, respectively. The test piece was pulled along the longitudinal direction of the test piece toward both sides at a tensile rate of 1 mm/min, and its strain (%) with respect to a tensile stress was measured.

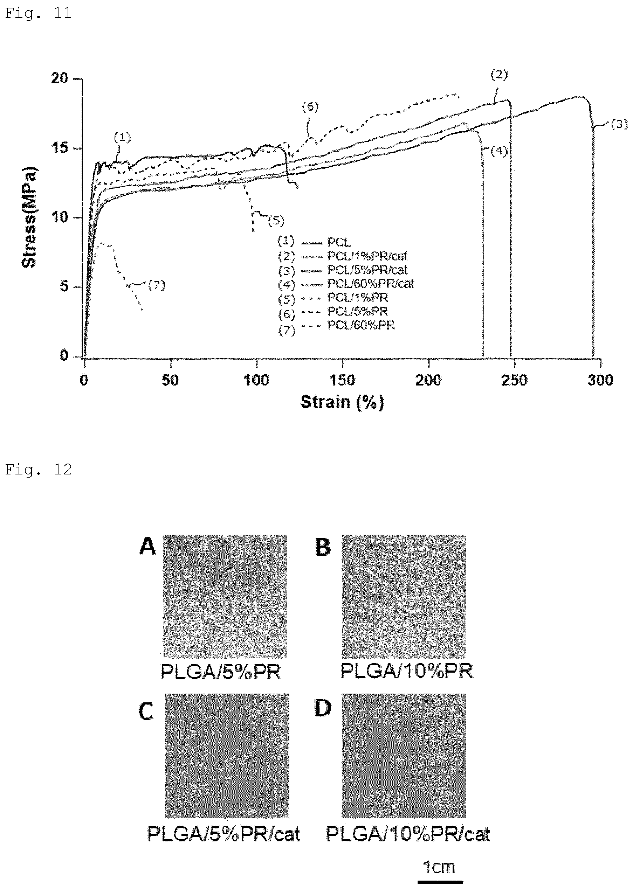

As shown in Fig. 11, as can be seen from a stress-strain curve of the polyrotaxane-added PCL, when the addition amount was 5%, the breaking elongation thereof increased, but the breaking elongation reduced depending on the addition amount of the polyrotaxane. Meanwhile, in each of the polyrotaxane-added PCL test pieces (2) to (4) having added thereto the ester exchange catalyst, both of its breaking elongation and breaking strength increased as compared to those of the PCL test piece (1). Further, in each of the polyrotaxane-added PCL test pieces (5) to (7) to which the ester exchange catalyst was not added, a periodic reduction in stress derived from the collapse of a lamellar crystal due to an applied load was observed. However, a uniform change in stress was obtained through the compatibilization of the polyrotaxane by the ester exchange reaction, and an increase in breaking elongation was also obtained.

### Example 11 Production of Polylactic Acid-co-Polyglycolic Acid Vitrimer-based Composition

A polyrotaxane (SH3400P, inclusion ratio: 28%, axial molecular weight: 35 kg/mol, entire molecular weight: 700 kg/mol) and PLGA (molecular weight: 24 kg/mol to 38 kg/mol, PLA:PGA=65:35) were sufficiently dissolved in chloroform serving as a solvent. The polyrotaxane was added so that its amount became 5 mass% or 10 mass% with respect to the PLGA. DBTDL serving as an ester exchange catalyst and hexamethylene diisocyanate serving as an auxiliary material were added to the solution, and the mixture was stirred for 10 minutes.

The solution was cast into a petri dish, and was left at rest at room temperature for 2 days so that the solvent was volatilized to cause the drying and solidification of the solution into a film shape. After that, the film was heated under reduced pressure at 80°C for 12 hours so that an ester exchange reaction was advanced. A PLGA test piece to which neither the ester exchange catalyst nor the auxiliary material was added was also produced as a comparative example.

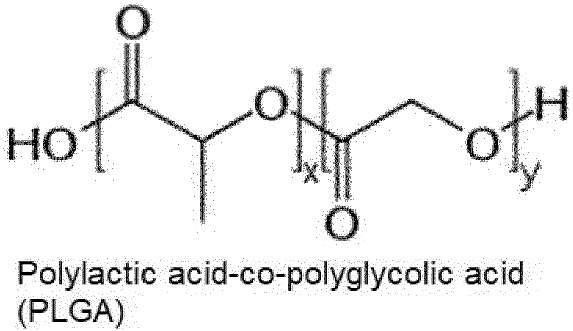

As shown in Fig. 12(A) and Fig. 12(B), a macrophase-separated structure having a size of around 0.5 cm was observed from an appearance photograph of the test piece obtained by adding 5 mass% or 10 mass% of the polyrotaxane to the PLGA. Meanwhile, as shown in Fig. 12(C) and Fig. 12(D), in the polyrotaxane-added PLGA having added thereto DBTDL serving as the ester exchange catalyst, a smooth surface structure was observed in each of the cases where the addition amounts of the polyrotaxane were 5 mass% and 10 mass%. Accordingly, it was suggested that compatibilization between the PLGA and the polyrotaxane was advanced by the acceleration of the ester exchange reaction.

### Example 12 Uniaxial Elongation Test

A test piece was cut out of the composition produced in Example 11 so as to be in a dumbbell state. The dimensions of the dumbbell test piece were set as follows: the thickness of the test piece was 0.1 mm, and the initial length and width of the middle shaft portion thereof were 12 mm and 2 mm, respectively. The test piece was pulled along the longitudinal direction of the test piece toward both sides at a tensile rate of 1 mm/min, and its strain (%) with respect to a tensile stress was measured.

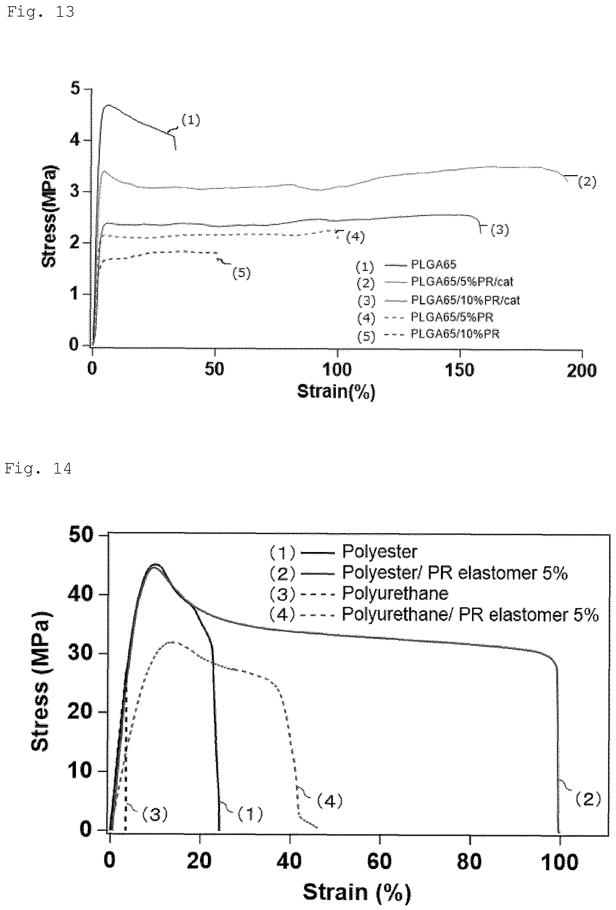

As shown in Fig. 13, as can been from the stress-strain curves of the polyrotaxane-added PLGAs (4) and (5), in each of the cases where the addition amounts were 5% and 10%, the breaking elongation of the PLGA increased as compared to that of the PLGA (1). Further, in each of the polyrotaxane-added PLGAs (2) and (3) having added thereto the ester exchange catalyst, its breaking elongation further increased. It is suggested that this is because the addition of the ester exchange catalyst accelerated compatibilization between the polyrotaxane and the PLGA to uniformly express the stress-dispersing effect of the polyrotaxane.

### Example 13 Toughening of Resin by Addition of Polyrotaxane Elastomer

### 1. Production of Polyrotaxane Elastomer Additive

Hexamethylene diisocyanate serving as a crosslinking agent and dibutyltin dilaurate serving as a catalyst were added to a solution of a polyrotaxane (SH3400P, inclusion ratio: 28%, axial molecular weight: 35 kg/mol, entire molecular weight: 700 kg/mol) in toluene, and the mixture was stirred for 3 minutes, followed by the casting of the solution into a petri dish. The solution was left at rest at 40°C for 1 hour or more to be caused to gel. After that, the gel was dried under reduced pressure at 105°C for 2 hours so that the solvent was removed, followed by the peeling of a film-like sample. The sample was washed well with acetone, and was then dried under reduced pressure at 60°C overnight. Thus, a polyrotaxane elastomer was produced. The elastomer was formed into powder having a particle diameter of about 80 µm by cryogenic crushing to produce a polyrotaxane elastomer additive.

### 2. Production of Composition comprising Polyester Resin

1,4-Cyclohexanedicarboxylic acid (CDCA), polytetramethylene ether glycol (PTMEG), 1,3-propanediol (PD), and the polyrotaxane elastomer additive produced in the section 1. (5 mass% with respect to the total amount) were mixed, and the mixture was stirred at 40°C for 10 min. Antimony trioxide serving as a polymerization catalyst-cum-ester exchange catalyst was added to the mixture, and the whole was stirred. After that, the mixture was left at rest at 40°C for 5 h to synthesize a prepolymer, and the prepolymer was heated in an oven at 80°C for 2 h. After that, the heated product was subjected to press molding with a decompression hot press machine at 150°C and 10 kN for 3 min to produce a film-like test piece. As comparison, a polyester to which the polyrotaxane elastomer additive was not added was similarly produced.

### 3. Production of Composition comprising Polyurethane

1,4-Cyclohexanedicarboxylic acid (CDCA), polytetramethylene ether glycol (PTMEG), 1,3-propanediol (PD), and the polyrotaxane elastomer additive produced in the section 1. (5 mass% with respect to the total amount) were mixed, and the mixture was stirred at 40°C for 10 min. Tin dilaurate serving as a polymerization catalyst was added to the mixture, and the whole was stirred. After that, the mixture was left at rest at 40°C for 5 h to synthesize a prepolymer, and the prepolymer was heated in an oven at 80°C for 2 h. After that, the heated product was subjected to press molding with a decompression hot press machine at 150°C and 10 kN for 3 min to produce a film-like test piece.

Polyurethane was used as comparison for recognizing the effect of an ester exchange because a bond exchange hardly occurred.

### Example 14 Uniaxial Elongation Test

A test piece was cut out of the composition produced in Example 13 so as to be in a dumbbell state. The dimensions of the dumbbell test piece were set as follows: the thickness of the test piece was 0.1 mm, and the initial length and width of the middle shaft portion thereof were 12 mm and 2 mm, respectively. The test piece was pulled along the longitudinal direction of the test piece toward both sides at a tensile rate of 1 mm/min, and its strain (%) with respect to a tensile stress was measured.

As shown in Fig. 14, as comparison between the presence and absence of the polyrotaxane elastomer additive, in the cases (2) and (4) where the polyrotaxane elastomer additive was added, the breaking elongations of both the polyester and the polyurethane tended to increase as compared to those in the cases (1) and (3) where the additive was not added. Meanwhile, as shown in Table 6, a difference caused by the presence or absence of an ester exchange is as follows: in the polyester, even when the additive is incorporated, its Young's modulus remains substantially unchanged, and only its breaking elongation increases; but in the polyurethane, the incorporation of the additive reduces its Young's modulus to about one half of the original value. It was suggested that this was because a bond exchange at an interface between the polyrotaxane elastomer additive and a resin matrix formed a covalent bond to toughen a material without changing its hardness.

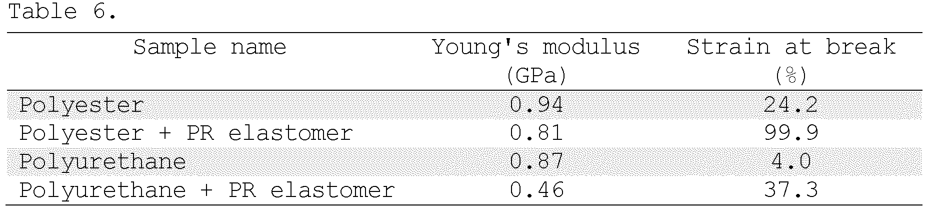

### Example 15 Chemical Degradation Test

A polyrotaxane-added epoxy vitrimer was examined for its biodegradability.

A fragment (1 g or less) of each of various samples and several tens of milliliters of an alcohol solvent (ethylene glycol) were added to a screw bottle. The mixture was stirred while being heated with a hot stirrer set to 150°C, followed by the recording of the weight of the sample with time. At the time of the measurement of the weight, the solvent was wiped off, and a normalized weight, which was obtained by dividing the weight of each of the samples at each time point by the initial weight of the sample in a dry state, was used in comparison between the samples. A degradation ratio is calculated from the expression "(weight of composition before heating-weight of composition at time of measurement)/weight of composition before heating*100 (%)."

Polymer samples were as described below. The SH3400P (Advanced Softmaterials Inc., entire molecular weight: about 700,000) was used as a polycaprolactone-modified polyrotaxane (PR-g-PCL).

Sample 1: A resin obtained by compositing the epoxy vitrimer and the polycaprolactone-modified polyrotaxane (SH3400P) at a weight ratio of 90:10
Sample 2: A resin formed only of the epoxy vitrimer
Sample 3: A resin obtained by compositing the epoxy vitrimer and a graft polymer, which is obtained by modifying hydroxypropylcellulose with polycaprolactone (HPC-PCL: a sample having a similar structure is used as comparison to the polyrotaxane), at a weight ratio of 90:10
Sample 4: A resin obtained by compositing the epoxy vitrimer and a polycaprolactone-modified polyrotaxane having an inclusion ratio of 2% at a weight ratio of 90:10

### (Result)

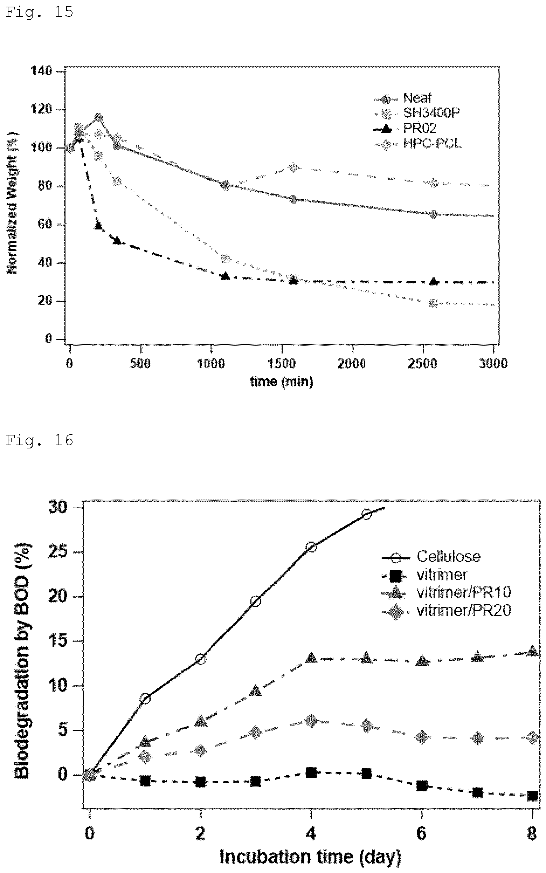

As shown in Fig. 15, the following result was obtained: while about 25% of the epoxy vitrimer alone (Neat) degraded in 24 hours, about 70% of each of the sample (SH3400P) having added thereto the SH3400P and the sample (PR02) having added thereto the PR02 degraded. Thus, the acceleration of the degradation by the addition of the polyrotaxane was observed. In the HPC-PCL sample (HPC-PCL) used as comparison, the sample having a structure similar to the polyrotaxane, the following tendency was observed: its degradability reduced as compared to that of the single epoxy vitrimer. It is suggested that this is due to the inhibition of the ester exchange reaction of the vitrimer as in a general additive. Accordingly, it is conceivable that the polyrotaxane expressed an accelerating effect on the ester exchange reaction and a reducing effect on an energy potential for the exchange reaction through the translational diffusion motion of its peculiar cyclic molecules on its axial polymer.

### Example 16 Biodegradation Test

A polyrotaxane-added epoxy vitrimer was examined for its biodegradability.

In Miyagawa beach of Miura city of Kanagawa Prefecture, a marine sediment and surface seawater were collected. 100 Grams of the sediment and 600 ml of the seawater were mixed in a glass container, and the mixture was irradiated with an ultrasonic wave for 10 seconds, followed by the separation of the sediment by filtration. Thus, extracted seawater was obtained. Each of polymer samples pulverized into a diameter of about 1 mm in the extracted seawater was incubated in the extracted seawater, and the biodegradability (%) of the polymer sample by a biochemical oxygen demand (BOD) with time was measured with a biochemical oxygen demand meter (BOD meter). The temperature of the seawater was managed with a low-temperature incubator, and was about 25°C.

Polymer samples were as described below.
Sample 1: A resin obtained by compositing the epoxy vitrimer and the polycaprolactone-modified polyrotaxane (SH3400P) at a weight ratio of 90:10
Sample 2: A resin obtained by compositing the epoxy vitrimer and the polycaprolactone-modified polyrotaxane (SH3400P) at a weight ratio of 80:20
Sample 3: A resin formed only of the epoxy vitrimer
Sample 4: Cellulose

### (Result)

As shown in Fig. 16, it is found that the biodegradability of the epoxy vitrimer alone (vitrimer) is substantially 0%, that is, the vitrimer does not show any degradability. However, it was found that 15% of the epoxy vitrimer (vitrimer/PR10) having added thereto 10% of the polyrotaxane degraded in 1 week. The degradability is the same as that of a general-purpose biodegradable plastic, and hence it was revealed that the addition of the polyrotaxane imparted biodegradability to the epoxy vitrimer. It has been conceived that a cyclodextrin and polycaprolactone serving as constituent components for the polyrotaxane can each impart degradability even in seawater having a low degrading bacterium concentration because the cyclodextrin and the polycaprolactone each have biodegradability, and hence serve as feed to attract degrading bacteria, to thereby contribute to biofilm formation. However, the biodegradability of the sample whose polyrotaxane addition ratio was 20% (vitrimer/PR20) reduced to about one half of that of the sample whose addition ratio was 10%. This is assumed to be because of the following reason: when the polyrotaxane addition ratio became a certain value or more, the proliferation of degrading bacteria that degraded the polyrotaxane became dominant, and hence the proliferation of degrading bacteria that degraded a vitrimer matrix was suppressed. Accordingly, it is found that an optimum value exists for the polyrotaxane addition amount.

### Example 17 Shape Memory Recoverability

A polyrotaxane-added epoxy vitrimer was examined for its shape memory recoverability.

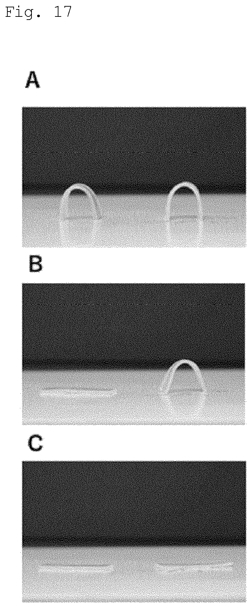

The test pieces of a sample 1 and a sample 2 each molded into a flat plate shape that measured 1 cm by 4 cm and had a substantially rectangular shape in plan view were prepared. Next, the two test pieces were deformed at temperatures equal to or more than the glass transition temperatures Tg of the respective samples, and were remolded while being cooled. Thus, the test pieces were formed into such bent shapes as shown in Fig. 17(A). In general, a vitrimer material shows a shape-memorizing property, and hence its shape at the time of molding at a temperature equal to or more than its topology freezing transition temperature Tv is kept. Here, the recovery rate of each of the test pieces was examined as follows: the test piece was heated on a hot plate at 150°C in a specific contact area; and at that time, a time period required for the test piece deformed from the initial flat plate shape at the time of the molding to return to the memorized initial shape was measured.
Sample 1: A resin (topology freezing transition temperature Tv: 130°C) obtained by compositing the epoxy vitrimer and the polycaprolactone-modified polyrotaxane (SH3400P) at a weight ratio of 90:10
Sample 2: A resin (topology freezing transition temperature Tv: 147°C) formed only of the epoxy vitrimer

### (Result)

As shown in Fig. 17(B), the test piece (left) of the epoxy vitrimer having added thereto 10% of the polyrotaxane recovered to the original flat plate shape in 1.5 minutes. The heating was further performed for 1.5 minutes, and it required 3 minutes for the test piece (right) of the epoxy vitrimer to recover to the memorized shape. In other words, it was shown that the addition of the polyrotaxane increased the rate of the shape recovery by a factor of 2. The foregoing results from the fact that the addition of the polyrotaxane improves the molecular mobility of the epoxy vitrimer.

### Example 18 Shape Memory Editing

A polyrotaxane-added epoxy vitrimer was examined for shape memory editing.

The test pieces of a sample 1 and a sample 2 each molded into a flat plate shape that measured 0.5 cm by 8 cm and had a substantially rectangular shape in plan view were prepared. Next, the two test pieces were deformed at temperatures equal to or more than the glass transition temperatures Tg of the respective samples, and were remolded while being cooled. After that, the test pieces were each fixed with a Teflon (trademark) tape so that no shape recovery occurred. Then, a shape memory-editing operation was performed by heating each of the test pieces at 200°C that was equal to or more than the topology freezing transition temperature Tv thereof for 5 hours. After that, a shape-retaining degree after the memory editing at the time of the heating of each of the samples at a temperature equal to or more than its glass transition temperature Tg was observed.
Sample 1: A resin (topology freezing transition temperature Tv: 130°C) obtained by compositing the epoxy vitrimer and the polycaprolactone-modified polyrotaxane (SH3400P) at a weight ratio of 90:10
Sample 2: A resin (topology freezing transition temperature Tv: 147°C) formed only of the epoxy vitrimer

### (Result)

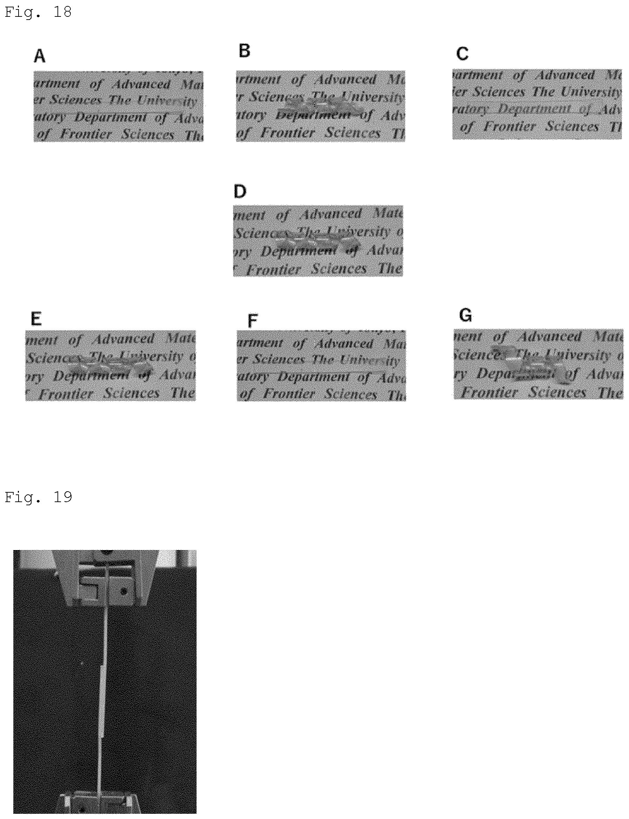

As shown in Fig. 18(A), a flat plate shape was memorized in the test piece of the epoxy vitrimer having added thereto 10% of the polyrotaxane at an initial stage. The test piece was deformed into a spiral shape at a temperature equal to or more than its glass transition temperature Tg, and the spiral shape was retained by cooling the test piece at a temperature equal to or less than the glass transition temperature Tg (Fig. 18(B)). When the test piece retaining the spiral shape was heated at a temperature equal to or more than the glass transition temperature Tg, its shape recovered to the flat plate shape that had been memorized at the initial stage (Fig. 18(C)). Next, the test piece was remolded into the spiral shape (Fig. 18(D)). After that, under a state in which the test piece was fixed with a Teflon (trademark) tape so that no shape recovery occurred, the test piece was heated at 200°C that was equal to or more than its topology freezing transition temperature Tv for 5 hours. Thus, an operation of editing the shape memory from the flat plate shape to the spiral shape was performed (Fig. 18(E)). The test piece was deformed into the flat plate shape at a temperature equal to or more than the glass transition temperature Tg, and the flat plate shape was retained by cooling the test piece at a temperature equal to or less than the glass transition temperature Tg (Fig. 18(F)). When the test piece retaining the flat plate shape is heated at a temperature equal to or more than the glass transition temperature Tg, its shape returns to the spiral shape after the shape memory editing (Fig. 18(G)). The foregoing shows that the shape memory-editing operation succeeded.

Meanwhile, no shape was memorized in the test piece of the epoxy vitrimer by its heating at 200°C for 5 hours. Although the shape memory of the test piece was able to be edited to some extent by its heating at 250°C for 12 hours or more, the color thereof changed owing to the heating at high temperature.

It was suggested that the addition of the polyrotaxane reduced the topology freezing transition temperature Tv, and hence enabled editing at lower temperature and with the minimum sample damage.

### Example 19 Measurement of Adhesive Force

A polyrotaxane-added epoxy vitrimer was examined for its weldability.

Two test pieces each molded into a flat plate shape that measured 0.5 cm by 8 cm and had a substantially rectangular shape in plan view were fixed under a state in which their portions each having a length of 4 cm were superimposed on each other. The test pieces were bonded to each other through welding involving a bond exchange by being heated at a temperature sufficiently higher than their topology freezing transition temperature Tv. The test pieces formed of each of a sample 1 and a sample 2 were prepared. The test pieces of a polyrotaxane-added epoxy vitrimer resin were welded to each other at 200°C for 30 minutes, and the test pieces of an epoxy vitrimer single resin for comparison were welded to each other at 250°C for 30 minutes. The bonded test pieces were subjected to strength measurement by a lap shear test using a uniaxial tensile tester.
Sample 1: A resin (topology freezing transition temperature Tv: 130°C) obtained by compositing the epoxy vitrimer and the polycaprolactone-modified polyrotaxane (SH3400P) at a weight ratio of 90:10
Sample 2: A resin (topology freezing transition temperature Tv: 147°C) formed only of the epoxy vitrimer

### (Result)

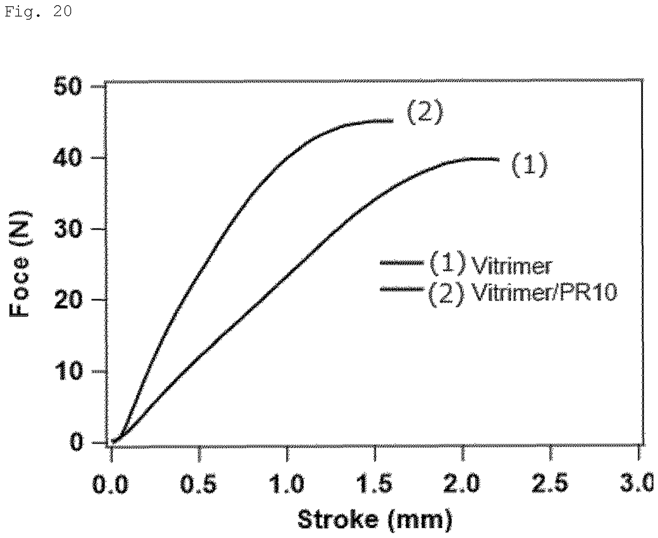

The welding of the test pieces of each of the sample 1 and the sample 2 succeeded by virtue of an ester exchange reaction at an interface between the test pieces. The test pieces of the vitrimer single resin serving as the sample 2 were not able to be sufficiently welded to each other at 200°C, but were welded to each other at 250°C. However, a change in color of the test pieces was observed owing to the heating at high temperature. Fig. 19 shows a state in which both the ends of the two welded test pieces of the sample 1 are pinched with the uniaxial tensile tester. The welded test pieces of the sample 2 were similarly tested. The results of the lap shear tests are shown in Fig. 20. An initial gradient means the hardness of an adhesive surface, and the maximum test force means an adhesive strength. It was suggested that a reduction in topology freezing transition temperature Tv by the addition of the polyrotaxane brought the suppression of the thermal deterioration of the interface and an increase in adhesive strength by a high-activity bond exchange.

## Claims

1. A composition comprising:
a vitrimer including a polymer having an ester bond; and
a polyrotaxane including a plurality of cyclic molecules and a chain polymer penetrating cavities of the plurality of cyclic molecules, at least part of the plurality of cyclic molecules each including a functional group having an ester bond.

2. The composition according to claim 1, wherein an ester exchange reaction occurs between the ester bond of the polymer and the ester bond of the cyclic molecules of the polyrotaxane.

3. The composition according to claim 1, wherein a content of the polyrotaxane in the composition is 20 mass% or less.

4. The composition according to claim 1, wherein the polymer having an ester bond includes a thermoplastic polymer having an ester bond or a thermosetting polymer having an ester bond.

5. The composition according to claim 1, wherein the polymer having an ester bond is a reaction product of an epoxy prepolymer having a glycidyl group and a carboxylic acid or a carboxylic acid anhydride.

6. The composition according to claim 1, wherein the polymer having an ester bond includes a polyester.

7. The composition according to claim 1, wherein a strain of the composition with respect to a tensile stress measured in a uniaxial elongation test increases as compared to a strain of a control product different from the composition only in that the control product is free of the polyrotaxane, and a difference between an initial elastic modulus of the composition and an initial elastic modulus of the control product is within ±10%.

8. The composition according to claim 1, wherein a content of the polyrotaxane in the composition is 20 mass% or less, and a degradation ratio of the composition after 1,500 minutes in a heating condition in an alcohol solvent is 50% or more.

9. The composition according to claim 1, wherein a content of the polyrotaxane in the composition is 20 mass% or less, and the composition is a biodegradable composition.

10. A self-healing material comprising the composition of any one of claims 1 to 9.

11. A method of producing a thermosetting composition comprising a vitrimer including a polymer having an ester bond and a polyrotaxane, the method comprising:
mixing an epoxy prepolymer having a glycidyl group and the polyrotaxane, the polyrotaxane including a plurality of cyclic molecules and a chain polymer penetrating cavities of the plurality of cyclic molecules, at least part of the plurality of cyclic molecules each including a functional group having an ester bond; and
mixing the mixture and a carboxylic acid or a carboxylic acid anhydride, to cure the mixture.

12. The method according to claim 11, wherein the mixing the mixture and the carboxylic acid or the carboxylic acid anhydride is performed in the presence of an ester exchange catalyst.

13. The method according to claim 11, wherein the epoxy prepolymer having a glycidyl group is a compound represented by the following formula (I): 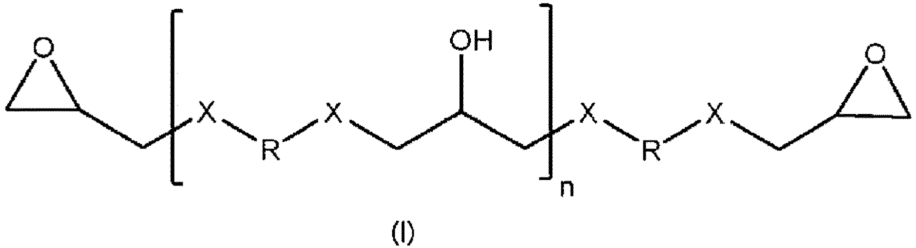 where X represents O, NH, or C(0)O, R represents a divalent aliphatic and/or aromatic moiety, and "n" represents a polymerization degree, and "n" represents from 0 to 25.

14. A method of producing a thermoplastic composition comprising a vitrimer including a polymer having an ester bond and a polyrotaxane, the method comprising mixing a monomer for forming a thermoplastic polymer having an ester bond and the polyrotaxane, the polyrotaxane including a plurality of cyclic molecules and a chain polymer penetrating cavities of the plurality of cyclic molecules, at least part of the plurality of cyclic molecules each including a functional group having an ester bond.
